# EUROPÄISCHE PATENTSCHRIFT

(11) **EP 3 763 012 B1**
(45) Veröffentlichungstag und Bekanntmachung des Hinweises auf die Patenterteilung: **14.06.2023**
(21) Anmeldenummer: 19709851.0
(22) Anmeldetag: 26.02.2019
(51) Int. Cl.: H02J 3/16, H02J 3/24, H02J 3/38, H02J 3/46, H02J 3/48, H02J 3/50

(54) **VERFAHREN ZUM BETRIEB EINER ENERGIEERZEUGUNGSANLAGE UND ENERGIEERZEUGUNGSANLAGE**
METHOD FOR OPERATING AN ENERGY GENERATING SYSTEM, AND ENERGY GENERATING SYSTEM
PROCÉDÉ DE FONCTIONNEMENT POUR UNE INSTALLATION DE PRODUCTION D'ÉNERGIE, ET INSTALLATION DE PRODUCTION D'ÉNERGIE

(30) Priorität: 09.03.2018 DE 102018105483
(43) Veröffentlichungstag der Anmeldung: 13.01.2021
(73) Patentinhaber: SMA Solar Technology AG, 34266 Niestetal (DE)
(72) Erfinder: KNOBLOCH, Andreas, 34121 Kassel (DE)
(86) Internationale Anmeldenummer: PCT/EP2019/054758
(87) Internationale Veröffentlichungsnummer: WO 2019/170479

(56) Entgegenhaltungen:
- EP-A1- 2 490 312
- CN-A- 105 186 566
- US-A1- 2016 190 810

## Beschreibung

### TECHNISCHES GEBIET DER ERFINDUNG

Die Erfindung betrifft ein Verfahren zum Betrieb einer Energieerzeugungsanlage an einem Wechselspannungsnetz und eine Energieerzeugungsanlage.

### STAND DER TECHNIK

Im Zuge der Energiewende werden zunehmend stromrichterbasierte Energieerzeugungsanlagen, insbesondere Photovoltaikanlagen mit Wechselrichtern an Wechselspannungsnetze angeschlossen und verdrängen konventionelle Kraftwerke mit Synchrongeneratoren und entsprechender Schwungmasse, die herkömmlicherweise eine hinreichende Trägheit und damit Stabilität des Wechselspannungsnetzes gewährleisten. In der Folge ist die Stabilität des Wechselspannungsnetzes bei regional hoher Durchdringung mit stromrichterbasierten Energieerzeugungsanlagen mit herkömmlichen Regelungsverfahren nur schwer beherrschbar, so dass Großstörungen, insbesondere solche mit einer Netzauftrennung an neuralgischen Punkten, zu großflächigen Netzausfällen führen. Um die Netzstabilität auch bei einer vollständigen Durchdringung eines Wechselspannungsnetzes mit stromrichterbasierten Energieerzeugungsanlagen sicherzustellen, ohne auf eine konventionelle Mindesterzeugung angewiesen zu sein, sind Regelungsverfahren und systemtechnische Lösungen notwendig, die dafür sorgen können, dass das Wechselspannungsnetz technisch weitgehend unabhängig von konventionellen Kraftwerken ist und somit ein hoher Anteil erneuerbarer Energien zur Versorgung der Lasten in einem Wechselspannungsnetz realisiert werden kann. Besonders wichtig ist dabei eine transiente Stabilität im Kurzzeitbereich, d.h. in einem Zeitbereich von Null bis zu etwa dreißig Sekunden nach einem Stör-Ereignis wie beispielsweise einem plötzlichen Ausfall einer hochbelasteten Leitung eines Übertragungsnetzes.

Die Stabilität eines elektrischen Wechselspannungsnetzes, insbesondere die Frequenzstabilität ist abhängig vom Gleichgewicht zwischen Erzeugung und Verbrauch im Wechselspannungsnetz. Bei einem Ungleichgewicht zwischen Erzeugungsleistung und Verbrauchsleistung ändert sich in der Konsequenz die Netzfrequenz insbesondere in Abhängigkeit von der Netzträgheit, der Höhe der Leistungsdifferenz zwischen Erzeugungsleistung und Verbrauchsleistung sowie der Änderungsgeschwindigkeit der Leistungsdifferenz.

Eine der kritischsten Störungen aus Sicht der Frequenzstabilität ist ein sogenannter System Split, bei dem eine Übertragungsleitung zwischen zwei Netzabschnitten z.B. aufgrund einer Überlastung getrennt wird. Zwar erfolgt ein Zubau vieler kleiner erneuerbarer Energieerzeugungsanlagen eher großflächig, jedoch werden Energieerzeugungsanlagen mit großer Leistung (z.B. große PV-, Wind- oder Wasserkraftwerke) aus verschiedenen Gründen nicht immer verbrauchernah gebaut werden können. Bei wenig Sonne und Wind wird es weiterhin häufig erforderlich sein, fehlende Leistung von außerhalb eines Netzabschnitts zu beziehen. Daher ist eine Trennung einer neuralgischen Leitung zwischen zwei Netzabschnitten besonders kritisch, wenn vor der Trennung ein hoher Leistungsaustausch zwischen den Netzabschnitten stattgefunden hat, z.B. weil Erzeuger und Verbraucher räumlich weit voneinander entfernt sind und durch die Trennung getrennt werden. In diesem Fall steht dem Netzabschnitt, der über die Übertragungsleitung Leistung bezogen hat, nach Störungseintritt zu wenig Erzeugungsleistung zur Verfügung, so dass die Netzfrequenz in diesem Netzabschnitt zu sinken beginnt, während in dem Netzabschnitt, der über die Übertragungsleitung Leistung abgegeben hat, überschüssige Erzeugungsleistung vorhanden ist, so dass die Netzfrequenz in diesem Netzabschnitt steigt.

Es ist somit tendenziell häufiger mit einem Leistungsungleichgewicht sowie mit schnellen Erzeugungsleistungsänderungen in einem Netzabschnitt zu rechnen. Insbesondere ein Erzeugungsüberschuss in einem Wechselspannungsnetz, der im Falle eines System Splits plötzlich auftritt und mit starken Frequenzschwankungen und steilen Frequenzgradienten einhergeht, ist in einem Netzabschnitt mit hohem Anteil an stromrichterbasierten Energieerzeugungsanlagen alleine mit bereits bekannten und ggf. normativ vorgeschriebenen Verfahren nicht beherrschbar, insbesondere nicht nur mit einer von außen, insbesondere von einem Netzbetreiber situativ zentral vorgegebenen Leistungsreduktion und/oder einer dezentralen frequenzabhängigen Leistungsreduktion mittels einer Frequenzstatik, mittels der die Energieerzeugungsanlagen gemäß einer P(f)-Kennlinie ihre Leistung bei Überfrequenz reduzieren oder wie beispielsweise aus der EP 2 759 033A1 bekannt Leistung aus dem Wechselspannungsnetz entnehmen. Eine unverzügliche Abschaltung der Energieerzeugungsanlagen kann zwar grundsätzlich dazu beitragen, das Wechselspannungsnetz vor dem Zusammenbruch zu bewahren, bringt jedoch andere Nachteile mit sich, beispielsweise einen Ertragsverlust für Betreiber der Energieerzeugungsanlage und Folgeprobleme beim Wiederanfahren der Energieerzeugungsanlagen nach Behebung des Netzfehlers.

Aus der EP 2 490 312 A1 ist ein Verfahren zum Betrieb einer PV-Anlage bekannt, bei dem in einem ersten Betriebsmodus die maximal mögliche (Wirk-)Leistung eines PV-Generators und einem zweiten Betriebsmodus eine geringere als die maximal mögliche Leistung abgerufen wird, wobei eine Umschaltung vom ersten in den zweiten Betriebsmodus insbesondere bei einer Überfrequenz oder einer schnellen Frequenzänderung im angeschlossenen Wechselspannungsnetz stattfindet, oder wenn die Spannung im Wechselspannungsnetz außerhalb eines erlaubten Bereichs liegt.

### AUFGABE DER ERFINDUNG

Der Erfindung liegt die Aufgabe zugrunde, ein Verfahren zum Betrieb einer Energieerzeugungsanlage aufzuzeigen, das optimal zur Stabilisierung eines Wechselspannungsnetz insbesondere im Falle einer Netzstörung beitragen kann, und einen Wechselrichter für eine Energieerzeugungsanlage bereitzustellen, der dazu eingerichtet ist, das erfindungsgemäße Verfahren auszuführen.

### LÖSUNG

Die Aufgabe wird durch ein Verfahren zum Betrieb einer Energieerzeugungsanlage mit den Merkmalen des Patentanspruchs 1, durch ein Verfahren zum Betrieb einer Energieerzeugungsanlage mit den Merkmalen des Patentanspruchs 5 und eine Energieerzeugungsanlage mit den Merkmalen des Patentanspruchs 8 gelöst. Bevorzugte Ausführungsformen sind in den abhängigen Patentansprüchen definiert.

### BESCHREIBUNG DER ERFINDUNG

In einem Verfahren zum Betrieb einer Energieerzeugungsanlage mit einem Photovoltaikgenerator und einem Wechselrichter wird elektrische Leistung zwischen dem Wechselrichter und dem Wechselspannungsnetz transferiert, wobei die transferierte elektrische Leistung eine Wirkleistung und eine Blindleistung umfasst und wobei der Photovoltaikgenerator in einem ersten Betriebsmodus mittels des Wechselrichters in einem Punkt maximaler Wirkleistung betrieben wird. In einem zweiten Betriebsmodus wird die Wirkleistung in Abhängigkeit von einem Netzfrequenzmomentanwert und von einer Netzfrequenzänderungsrate eingestellt und die Blindleistung in Abhängigkeit von einem Netzspannungsmomentanwert eingestellt.

Ein erfindungsgemäßes Verfahren ist dadurch gekennzeichnet, dass in dem zweiten Betriebsmodus die Blindleistung zusätzlich in Abhängigkeit von einer Netzspannungsänderungsrate eingestellt wird und dass die vom Wechselrichter in das Wechselspannungsnetz eingespeiste Wirkleistung im zweiten Betriebsmodus auf einen Wert kleiner null reduziert wird, so dass durch den Wechselrichter Wirkleistung aus dem Wechselspannungsnetz bezogen wird, und die so bezogene Wirkleistung durch den Wechselrichter gleichgerichtet und als DC-Leistung in den Photovoltaikgenerator rückgespeist wird, wenn
- die momentane Frequenzabweichung des Netzfrequenzmomentanwerts von einer Referenzfrequenz einen Frequenzabweichungsgrenzwert überschreitet,
- die eingespeiste Wirkleistung in Abhängigkeit von einer momentanen Frequenz-abweichung des Netzfrequenzmomentanwerts von einer Referenzfrequenz zu einem ersten Zeitpunkt auf null reduziert wurde und die momentane Frequenzabweichung zu einem zweiten, späteren Zeitpunkt über der Frequenzabweichung zum ersten Zeitpunkt liegt, oder
- die Netzfrequenzänderungsrate einen Frequenzänderungsratengrenzwert überschreitet.

Das erfindungsgemäße Verfahren ermöglicht es insbesondere stromgeregelten Photovoltaikanlagen mit stromrichterbasierten Wechselrichtern ohne nennenswerten Energiespeicher, im Falle eines Leistungsüberschusses in Stromnetzen mit einer hohen Durchdringung erneuerbarer Energieerzeugungsanlagen viel schneller und mit größerer und besser vorhersagbarer negativer Regelleistung zur Frequenzstabilisierung beizutragen. Eine aus dem Stand der Technik bekannte P(f)-Abregelung gemäß einer Frequenzstatik wirkt zu langsam, um Wechselspannungsnetze, insbesondere solche mit geringer Trägheit bei schnellen transienten Frequenzänderungen, insbesondere im Subsekundenbereich zu stabilisieren. Die vorliegende Erfindung stellt ein Regelungsverfahren zur Verfügung, das zusätzliche Informationen berücksichtigt, insbesondere die Netzfrequenzänderungsrate, um im Falle eines Leistungsüberschusses in dem Wechselspannungsnetz schneller und effektiver zur Stabilisierung des Wechselspannungsnetz (bezüglich Frequenz und Spannung) beizutragen.

Durch die Einstellung der Wirkleistung der Energieerzeugungsanlage in Abhängigkeit der Netzfrequenzänderungsrate kann die Energieerzeugungsanlage weitgehend verzögerungsfrei und mit hohen Stellgrößen, d.h. nahezu instantan, auf große und steile oder gar sprunghafte Frequenzänderungen reagieren. Damit kann bei einer Anwendung des Verfahrens auf einer Vielzahl von Wechselrichtern ausreichend kostengünstige Regelenergie innerhalb kürzester Zeit mobilisiert werden, um einem großen Leistungsungleichgewicht nach einer Großstörung in einem Wechselspannungsnetz effektiv zu begegnen.

Das Verfahren ist besonders effektiv auf Energieerzeugungsanlagen mit leistungselektronischen Wechselrichtern anwendbar, da solche sich durch besonders schnelle Reaktionszeiten auf äußere Einflüsse auszeichnen, wobei prinzipbedingt keinerlei Kommunikationsverzögerungen auftreten. Grundsätzlich sind jedoch auch Steuerungsvorrichtungen, die in einer größeren Energieerzeugungsanlage eine Vielzahl von Wechselrichtern steuern, zur Durchführung des erfindungsgemäßen Verfahrens geeignet. Dabei sind die Einstellzeiten im Wesentlichen lediglich durch die Geschwindigkeit und Genauigkeit der Frequenzmessung, welche üblicherweise mittels einer PLL mit üblichen Einschwingzeiten im Bereich unterhalb einer Netzperiode aufweisen, sowie die Dynamik der Regelung des vom Wechselrichter eingespeisten Stroms begrenzt. Aufgrund des absehbaren technischen Fortschritts steigende Schalt- und Regelfrequenzen innerhalb handelsüblicher Wechselrichter tragen zu einer weiteren Verbesserung der Dynamik bei, und die Herstellkosten einer Energieerzeugungsanlage werden durch das erfindungsgemäße Verfahren nicht erhöht.

Die Erfindung basiert auf der Erkenntnis, dass Netzfrequenz und Netzspannung bei Störereignissen in einem schwachen Wechselspannungsnetz mit verminderter Trägheit und/oder hoher Netzimpedanz viel stärker miteinander gekoppelt sind als in einem herkömmlichen Wechselspannungsnetz mit hoher Trägheit und/oder niedriger Netzimpedanz. Insbesondere wird in einem schwachen Wechselspannungsnetz mit geringer Trägheit und hoher Netzimpedanz neben der Netzfrequenz auch die lokale Netzspannung durch die Wirkleistungseinspeisung der Erzeuger beeinflusst (Spannungsanstieg bei Wirkleistungseinspeisung, Spannungsabfall bei Wirkleistungsbezug). Daher genügt es nicht, Netzspannungs- und Frequenzschwankungen als getrennte regelungstechnische Problemstellungen mit verschiedenen Stellgrößen zu betrachten. Durch die erfindungsgemäße Stützung der Netzspannung durch die Einstellung der Blindleistung in Abhängigkeit von dem Netzspannungsmomentanwert und dem Netzspannungsänderungsrate wird erreicht, dass sich die Energieerzeugungsanlage bei der dynamischen Regelleistungsbereitstellung nicht aufgrund einer Über- oder Unterspannung vom Netz trennt. Im Gegensatz zur herkömmlichen statischen Spannungshaltung durch Blindleistungsbereitstellung wird die Energieerzeugungsanlage bei transienten Netzspannungsschwankungen nicht zwingend in einen sogenannten Fault-Ride-Through-Betriebsmodus versetzt, sondern reagiert in einer aus Sicht der Netzstabilität optimalen Weise mit einer priorisierten Bereitstellung von Wirk- und Blindleistung.

In einer Ausführungsform des Verfahrens kann in dem zweiten Betriebsmodus die Wirkleistung zusätzlich in Abhängigkeit von dem Netzspannungsmomentanwert und/oder von der Netzspannungsänderungsrate und/oder die Blindleistung zusätzlich in Abhängigkeit von dem Netzfrequenzmomentanwert und/oder von der Netzfrequenzänderungsrate eingestellt werden.

In einer weiteren Ausführungsform des Verfahrens kann in Abhängigkeit von Eigenschaften des Wechselspannungsnetzes, insbesondere in Abhängigkeit einer vor Inbetriebnahme der Energieerzeugungsanlage oder bei einem Wechsel vom ersten in den zweiten Betriebsmodus aktuell ermittelten Trägheit und/oder Netzimpedanz des Wechselspannungsnetzes eine Priorisierung festgelegt werden, anhand derer für den Fall, dass sich aus der einzustellenden Wirkleistung und der einzustellenden Blindleistung eine Scheinleistung ergeben würde, die oberhalb eines für den Wechselrichter gegebenen Scheinleistungsgrenzwertes liegt, festgelegt werden, ob bevorzugt die einzustellende Wirkleistung und eine geringere als die einzustellende Blindleistung oder bevorzugt die einzustellende Blindleistung und eine geringere als die einzustellende Wirkleistung eingestellt wird. Eine hier relevante Eigenschaft ist beispielsweise durch die Netzebene vorgegeben, an die die Energieerzeugungsanlage angeschlossen ist, da beispielsweise ein Niederspannungsnetz, insbesondere ein Ortsnetz, hinsichtlich der Beeinflussbarkeit von Netzspannung und/oder Netzfrequenz durch Wirk- und/oder Blindleistungseinspeisung deutlich andere Eigenschaften aufweist als ein Mittelspannungsnetz oder gar ein Übertragungsnetz auf Hochspannungsebene. Konkreter können diese für die Netzstützung relevanten Eigenschaften durch eine Trägheit und/oder eine Netzimpedanz aus Sicht der Energieerzeugungsanlage beschrieben werden, wobei die Trägheit und/oder die Netzimpedanz als Parametrisierung der Energieerzeugungsanlage vorgegeben oder auch von der Energieerzeugungsanlage oder einer sonstigen Einrichtung im Wechselspannungsnetz situativ ermittelt werden können. Darüber hinaus kann eine aktuelle Ermittlung der Trägheit und/oder der Netzimpedanz berücksichtigen, dass sich Eigenschaften des Wechselspannungsnetzes aus Sicht der Energieerzeugungsanlage durch ein Störereignis ändern können, insbesondere wenn ein System Split in relativer Nähe zur Energieerzeugungsanlage auftritt.

Es ist anzumerken, dass die Berücksichtigung von derartigen Eigenschaften des Wechselspannungsnetz für die Priorisierung sinnvoll sein kann, für die eigentliche Abhängigkeit der einzuspeisenden Wirk- und Blindleistung von Netzfrequenzmomentanwert und Netzfrequenzänderungsrate bzw. von Netzspannungsmomentanwert und Netzspannungsänderungsrate jedoch nicht notwendig ist. Das erfindungsgemäße Verfahren zeichnet sich gerade durch einen gewissermaßen selbstadaptiven Beitrag der Energieerzeugungsanlage zur Netzstabilisierung aus, da sich die Eigenschaften des Wechselspannungsnetz insbesondere in den Änderungsraten von Netzfrequenz und Netzspannung widerspiegeln und eine Berücksichtigung dieser Änderungsraten somit bereits die Berücksichtigung der Eigenschaften des Wechselspannungsnetz beinhaltet.

In einer alternativen Ausführungsform des Verfahrens kann in dem zweiten Betriebsmodus für den Fall, dass sich aus der einzustellenden Wirkleistung und der einzustellenden Blindleistung eine Scheinleistung ergeben würde, die oberhalb eines für den Wechselrichter gegebenen Scheinleistungsgrenzwertes liegt, eine Scheinleistung entsprechend des Grenzwertes eingestellt werden, die bevorzugt die einzustellende Wirkleistung und eine geringere als die einzustellende Blindleistung umfasst, wenn der Netzfrequenzmomentanwert und/oder die Netzfrequenzänderungsrate oberhalb eines jeweiligen Frequenzpriorisierungsgrenzwertes liegt, oder bevorzugt die einzustellende Blindleistung und eine geringere als die einzustellende Wirkleistung umfasst, wenn der Netzspannungsmomentanwert und/oder die Netzspannungsänderungsrate oberhalb eines Spannungspriorisierungsgrenzwertes liegt, oder die Wirkleistung und Blindleistung mit denjenigen Beträgen umfasst, die zum letzten Zeitpunkt eingestellt waren, an denen die einzustellende Wirkleistung und die einzustellende Blindleistung eine Scheinleistung unterhalb des Scheinleistungsgrenzwertes ergaben, wenn sowohl der Frequenzpriorisierungsgrenzwert als auch der Spannungspriorisierungsgrenzwert überschritten ist. Konkret kann dazu ein Frequenzpriorisierungsgrenzwert vorgegeben sein, der einem Netzfrequenzgrenzwert entspricht, bei dessen Überschreitung sich die Energieerzeugungsanlage herkömmlicherweise vom Netz trennen müsste, oder wenig darunter liegen; ein Spannungspriorisierungsgrenzwert kann einem Spannungsabweichungsgrenzwert entsprechen, bei dessen Überschreitung sich die Energieerzeugungsanlage aufgrund von Über- bzw. Unterspannung herkömmlicherweise vom Netz trennen müsste, oder wenig darunter liegen. Damit kann insbesondere gewährleistet werden, dass einer überwiegenden Abweichung der Netzfrequenz bevorzugt durch Reduzierung der Wirkleistung entgegengewirkt wird, und dass im Umkehrschluss eine etwaige ungewünschte übermäßige Beeinflussung der Netzspannung durch eine Reduzierung der Wirkleistung, die insbesondere auf Niederspannungsebene in einem Ortsnetz auftreten kann, durch eine Bevorzugung einer spannungsstützenden Bereitstellung von Blindleistung vermieden wird.

Durch die adaptive Priorisierung zwischen bedarfsabhängiger Bereitstellung von Wirkleistung und Blindleistung im Rahmen der baulich beschränkten Leistungsfähigkeit des Wechselrichters, d.h. bei begrenzter Scheinleistung der Energieerzeugungsanlage, wird erfindungsgemäß je nach aktueller Netzträgheit entweder die Wirkleistung zugunsten der Bereitstellung der Blindleistung reduziert oder umgekehrt die Blindleistung zugunsten der Bereitstellung von Wirkleistung reduziert.

In dem Verfahren zum Betrieb einer Energieerzeugungsanlage mit einem Photovoltaikgenerator und einem Wechselrichter, bei dem der Wechselrichter mit einem Wechselspannungsnetz verbunden ist und elektrische Leistung mit dem Wechselspannungsnetz austauscht, und bei dem die ausgetauschte elektrische Leistung eine Wirkleistung und eine Blindleistung umfasst, kann der Photovoltaikgenerator mittels des Wechselrichters in einem Arbeitspunkt betrieben werden, in dem der Photovoltaikgenerator eine maximale DC-Leistung oder eine vorgegebene, gegenüber der maximalen DC-Leistung reduzierte DC-Leistung abgibt. Der Wechselrichter wandelt die DC-Leistung um und speist sie als Wirkleistung in das Wechselspannungsnetz ein. Zusätzlich wird eine momentane Netzspannung des Wechselspannungsnetzes gemessen und eine momentane Spannungsabweichung der momentanen Netzspannung von einer Referenzspannung ermittelt, und die zwischen dem Wechselrichter und dem Wechselspannungsnetz ausgetauschte Blindleistung wird in Abhängigkeit von der momentanen Spannungsabweichung eingestellt. Darüber hinaus wird eine momentane Netzfrequenz des Wechselspannungsnetzes, insbesondere mittels einer PLL im Wechselrichter, eine momentane Frequenzabweichung der momentanen Netzfrequenz von einer Referenzfrequenz bestimmt, und die vom Wechselrichter in das Wechselspannungsnetz eingespeiste Wirkleistung in Abhängigkeit von der momentanen Frequenzabweichung reduziert, wenn die momentane Frequenzabweichung einen ersten Frequenzabweichungsgrenzwert überschreitet. Der erste Frequenzabweichungsgrenzwert kann dabei auch null betragen, so dass die eingespeiste Wirkleistung in Abhängigkeit von der momentanen Frequenzabweichung reduziert wird, sobald die momentane Netzfrequenz von der Referenzfrequenz abweicht, oder ein Totband um eine Nennfrequenz des Wechselspannungsnetz definieren, wobei bei Netzfrequenzen innerhalb des Totbandes keine Reduktion der Wirkleistung in Abhängigkeit von der momentanen Frequenzabweichung vorgegeben ist. Zusätzlich wird aus dem Zeitverlauf der Netzfrequenz eine Frequenzänderungsrate bestimmt und die vom Wechselrichter in das Wechselspannungsnetz eingespeiste Wirkleistung in Abhängigkeit von der Frequenzänderungsrate reduziert. Das erfindungsgemäße Verfahren ist dadurch gekennzeichnet, dass aus dem Zeitverlauf der Netzspannung eine Spannungsänderungsrate bestimmt wird und die zwischen dem Wechselrichter und dem Wechselspannungsnetz ausgetauschte Blindleistung in Abhängigkeit von der Spannungsänderungsrate eingestellt wird. Zusätzlich erfolgt ein Reduzieren der vom Wechselrichter in das Wechselspannungsnetz eingespeisten Wirkleistung auf einen Wert kleiner null, so dass durch den Wechselrichter Wirkleistung aus dem Wechselspannungsnetz bezogen wird, wenn
- die momentane Frequenzabweichung einen zweiten Frequenzabweichungsgrenzwert überschreitet oder
- die eingespeiste Wirkleistung in Abhängigkeit von einer momentanen Frequenzabweichung zu einem ersten Zeitpunkt auf null reduziert wurde und die momentane Frequenzabweichung zu einem zweiten, späteren Zeitpunkt über der Frequenzabweichung zum ersten Zeitpunkt liegt oder
- die Frequenzänderungsrate einen Frequenzänderungsratengrenzwert überschreitet, und ein Gleichrichten der so bezogenen Wirkleistung und Rückspeisen als DC-Leistung in den Photovoltaikgenerator durch den Wechselrichter.

Mit dem erfindungsgemäßen Verfahren ist eine permanente Korrektur der Wirkleistung und der Blindleistung entsprechend einstellbarer Zeitkonstanten entgegengesetzt zur Frequenzänderung bzw. zur Spannungsänderung möglich, so dass das Verfahren eine Trägheit des Wechselspannungsnetz virtuell nachbildet und damit permanent stabilisierend auf das Wechselspannungsnetz einwirkt.

Mit dem erfindungsgemäßen Verfahren kann die vom Wechselrichter in das Wechselspannungsnetz eingespeiste Wirkleistung auf einen Wert kleiner null reduziert werden, so dass durch den Wechselrichter Wirkleistung aus dem Wechselspannungsnetz bezogen wird. Dies kann dann geschehen, wenn die momentane Frequenzabweichung einen zweiten Frequenzabweichungsgrenzwert überschreitet, die eingespeiste Wirkleistung in Abhängigkeit von einer momentanen Frequenzabweichung zu einem ersten Zeitpunkt auf null reduziert wurde und die momentane Frequenzabweichung zu einem zweiten, späteren Zeitpunkt über der Frequenzabweichung zum ersten Zeitpunkt liegt, oder wenn die Frequenzänderungsrate einen Frequenzänderungsratengrenzwert überschreitet. Die in einem dieser Fälle durch den Wechselrichter aus dem Wechselspannungsnetz bezogene Wirkleistung wird im Wechselrichter gleichgerichtet und durch den Wechselrichter als DC-Leistung in den Photovoltaikgenerator rückgespeist.

Während in herkömmlichen Energieerzeugungsanlagen mit Photovoltaikgeneratoren ein Rückspeisebetrieb des Wechselrichters in der Regel unerwünscht ist und weitestgehend gemieden wird, erweitert das erfindungsgemäße Verfahren hingegen den Stellbereich von Energieerzeugungsanlagen mit Photovoltaikgeneratoren zur Bereitstellung von Regelleistung um die Leistungsaufnahmefähigkeit der Photovoltaikgeneratoren als Last. Dies ergibt insbesondere eine größere und zuverlässig vorhersagbare negativer Regelleistung selbst bei wenig oder keiner Sonneneinstrahlung, also beispielsweise nachts, und insbesondere auch parallel zur Blindleistungsbereitstellung bei Nacht. Damit stellt jede Energieerzeugungsanlage in einem Wechselspannungsnetz, die mit dem erfindungsgemäßen Verfahren betrieben wird, jederzeit mindestens die mögliche Rückspeiseleistung gesichert zur Netzstabilisierung zur Verfügung, im Falle einer momentanen Wirkleistungseinspeisung aufgrund vom Photovoltaikgenerator verfügbarer DC-Leistung sogar entsprechend mehr. Darüber hinaus wird die Vorhersagbarkeit der verfügbaren absoluten negativen Regelleistung, welche zu einem bestimmten Zeitpunkt zur Abregelung zur Verfügung steht, deutlich verbessert, da die mögliche Rückspeiseleistung unabhängig von einstrahlungsbedingten Fluktuationen der DC-Leistung verfügbar ist. Die Erfindung macht somit die im Stand der Technik bisher unberücksichtigte Möglichkeit der dynamischen Frequenzstabilisierung unter Nutzung der Photovoltaikgeneratoren einer Energieerzeugungsanlage ohne nennenswerten Energiespeicher als Last insbesondere bei sehr hohem und/oder plötzlich auftretendem Leistungsüberschuss im Wechselspannungsnetz nutzbar.

Zur Reduktion der Einspeiseleistung einer Energieerzeugungsanlage mit Photovoltaikgeneratoren im Rahmen einer herkömmlichen Frequenzstatik wird die DC-Leistung der Photovoltaikgenerator üblicherweise dadurch reduziert, dass die der Eingangsspannung des Wechselrichters entsprechende Spannung am Photovoltaikgenerator vom Punkt maximaler Leistung (Maximum Power Point, MPP) entlang der PV-Kennlinie des Photovoltaikgenerators in Richtung Generatorleerlauf erhöht wird. In einer konkreten Umsetzung des erfindungsgemäßen Verfahrens kann die Spannung am Photovoltaikgenerator in besonders einfacher Weise weiter entlang der PV-Kennlinie erhöht werden, um einen Rückspeisestrom in den PV-Generator zu erwirken. Die Steilheit der PV-Kennlinie im Bereich oberhalb der Leerlaufspannung ist dabei derart hoch, dass bereits geringe Spannungsänderungen zu einem großen Aufnahmestrom des PV-Generators führen. Dies erweist sich als besonders vorteilhaft, indem hohe Geschwindigkeiten der Einstellung der Wirkleistung zur Netzstabilisierung bei schnellen transienten Vorgängen erreichbar sind. Dabei ist aufgrund der erhöhten Spannung am Photovoltaikgenerator ein Strom mit geringerem Betrag als der Strom am MPP notwendig, um eine negative Leistung mit einem Betrag entsprechend der MPP-Leistung in den Photovoltaikgenerator rückzuspeisen.

In einer Ausführungsform des Verfahrens kann die Wirkleistung anhand eines Wirkleistungsstellwertes vorgegeben werden, der in Abhängigkeit von der momentanen Frequenzabweichung und der Frequenzänderungsrate berechnet wird. Dabei können der momentanen Frequenzabweichung und der Frequenzänderungsrate Zugehörigkeitswerte von Zugehörigkeitsfunktionen zugeordnet, eine UND-Verknüpfung der Zugehörigkeitswerte ausgeführt und der Wirkleistungsstellwert anhand einer normierten Gewichtung der verknüpften Zugehörigkeitswerte ermittelt werden. Dies entspricht einer besonders geeigneten Wahl des Stellwerts auf Basis von Wenn-Dann-Regeln im Sinne einer Fuzzy Logik, die für ein solch komplexes, nichtlineares und zeitvariantes System wie ein Wechselspannungsnetz mit einer großen Vielzahl von Erzeugern und Verbrauchern besonders geeignet ist. Darüber hinaus kann die Blindleistung anhand eines Blindleistungsstellwertes vorgegeben werden, der in Abhängigkeit von der momentanen Spannungsabweichung und der Spanungsänderungsrate berechnet wird, wobei der momentanen Spannungsabweichung und der Spannungsänderungsrate Zugehörigkeitswerte von Zugehörigkeitsfunktionen zugeordnet werden, eine UND-Verknüpfung der Zugehörigkeitswerte ausgeführt wird und der Blindleistungsstellwert anhand einer normierten Gewichtung der verknüpften Zugehörigkeitswerte ermittelt wird.

Eine erfindungsgemäße Energieerzeugungsanlage mit einem Photovoltaikgenerator und einem Wechselrichter ist dadurch gekennzeichnet, dass der Wechselrichter zur Durchführung des beschriebenen Verfahrens eingerichtet ist. Der Wechselrichter kann eine AC-seitige Wechselrichterbrückenschaltung, einen DC-seitigen Gleichspannungswandler und einen Gleichspannungszwischenkreis umfassen, wobei der DC-seitige Gleichspannungswandler eine Diode im Leistungspfad und Mittel zur Überbrückung der Diode im Falle einer Rückspeisung elektrischer Leistung in den Photovoltaikgenerator umfasst.

### KURZBESCHREIBUNG DER FIGUREN

Im Folgenden wird die Erfindung anhand in den Figuren dargestellter Ausführungsbeispiele weiter erläutert und beschrieben.
- Fig. 1: zeigt eine Abhängigkeit einer Wirkleistung P einer Energieerzeugungsanlage von einer Netzfrequenz f eines Wechselspannungsnetzes,
- Fig. 2: zeigt eine Abhängigkeit einer Blindleistung Q einer Energieerzeugungsanlage von einer Netzspannung eines Wechselspannungsnetzes,
- Fig. 3: zeigt bekannte PV-Kennlinien eines Photovoltaikgenerators,
- Fig. 4: zeigt eine gegenüber Fig. 1 modifizierte Abhängigkeit einer einzustellenden Wirkleistung P von der Netzfrequenz f des Wechselspannungsnetzes,
- Fig. 5: zeigt ein Blockschaltbild einer Regelungsfunktion zur Bestimmung von Sollwerten für eine einzuspeisende Wirkleistung P bzw. eine einzuspeisende Blindleistung Q, und
- Fig. 6: zeigt ein Blockschaltbild einer gegenüber Fig. 5 modifizierten Regelungsfunktion.

### FIGURENBESCHREIBUNG

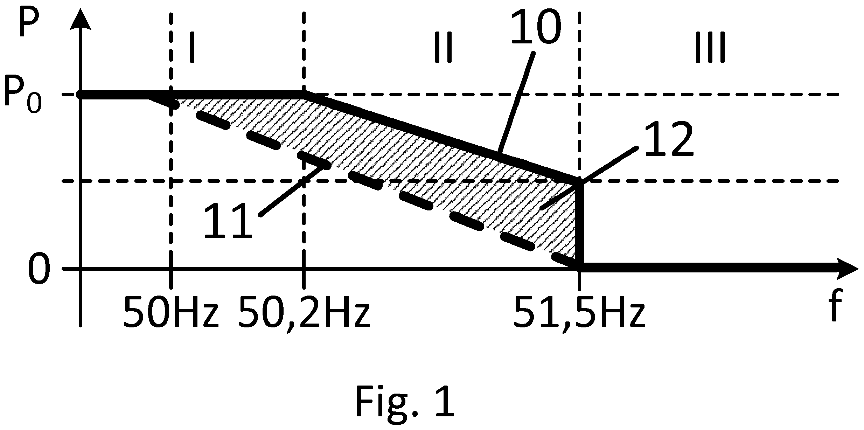

**Fig. 1** zeigt eine einzustellende Wirkleistung P, die von einer Energieerzeugungsanlage in ein Wechselspannungsnetz eingespeist wird, in Abhängigkeit einer Netzfrequenz f des Wechselspannungsnetzes. Die Netzfrequenz f kann in drei Bereiche I, II und III aufgeteilt werden, wobei im Bereich I ein weitgehend störungsfreier Normalbetrieb des Wechselspannungsnetz angenommen wird und im Bereich II eine Überfrequenz vorliegt, der von der Energieerzeugungsanlage entgegenzuwirken ist. Im Bereich III ist die Netzfrequenz so hoch, dass die Energieerzeugungsanlage sich üblicherweise vom Wechselspannungsnetz trennen soll.

Die als durchgezogene Linie dargestellte Frequenzstatik 10 entspricht einer herkömmlichen Abhängigkeit der Wirkleistung P von der Netzfrequenz f, anhand der eine dezentrale Energieerzeugungsanlage eine elektrische Leistung P zur Einspeisung in das Wechselspannungsnetz mit einer Nennfrequenz von beispielsweise 50 Hz einstellt. Dazu wird die Spannung des Wechselspannungsnetzes am Ort der Energieerzeugungsanlage gemessen und aus der gemessenen Spannung, beispielsweise mittels einer Netzsynchronisationseinheit, die eine Phasenregelschleife (PLL) umfassen kann, die Netzfrequenz f des Wechselspannungsnetz bestimmt und überwacht. Solange die Netzfrequenz f in einem Frequenzbereich I, d.h. in diesem Beispiel unterhalb von 50,2 Hz liegt (und oberhalb eines nicht dargestellten unteren Grenzwertes, der deutlich unterhalb von 50 Hz liegt), kann die Energieerzeugungsanlage eine Wirkleistung Po einspeisen, die keinen frequenzabhängigen Einschränkungen unterworfen ist und daher beispielsweise der maximal möglichen Leistung P_{MPP} eine Generators, insbesondere eines Photovoltaikgenerators der Energieerzeugungsanlage, oder einer beispielweise um eine Regelreserve oder aufgrund anderer externer Randbedingungen darunter liegenden Leistung entspricht.

Wenn die Netzfrequenz f in einem Frequenzbereich II liegt, d.h. in diesem Beispiel zwischen 50,2 Hz und 51,5 Hz, gibt die Frequenzstatik 10 eine frequenzabhängige Reduktion der einzuspeisenden Wirkleistung P gegenüber der Leistung Po vor, wobei die Frequenzstatik 10 im Frequenzbereich II eine Steilheit von beispielsweise 0,4 x Po pro Hz aufweist. Zudem kann gefordert sein, dass die derart reduzierten Wirkleistung P innerhalb einer maximalen Einstellzeit von beispielsweise etwa 2 bis 5 Sekunden eingestellt werden muss. Wenn die Netzfrequenz f in einem Frequenzbereich III liegt, d.h. in diesem Beispiel oberhalb von 51,5 Hz, kann gefordert sein, dass die Energieerzeugungsanlage sich vom Wechselspannungsnetz trennen muss, d.h. gemäß Frequenzstatik 10 die Wirkleistung P auf null reduziert.

Die Reduzierung der eingespeisten Wirkleistung P gemäß der Frequenzstatik 10 bewirkt somit eine frequenzabhängige Reaktion der Energieerzeugungsanlage bereits bevor etwaige externe Befehle überlagerter Regler oder manuelle oder automatische Abregelbefehle des Netzbetreibers wirksam werden. In der Frequenzstatik 10 wird allerdings nur der Momentanwert der Frequenz berücksichtigt, und die geforderten Einstellzeiten sind vergleichsweise hoch, so dass die Energieerzeugungsanlage vergleichsweise langsam auf Frequenzänderungen insbesondere im Frequenzbereich II reagiert.

Zusätzlich zur Frequenzstatik 10 kann daher eine Abregelbereich 12 mit einer unteren Abregelgrenze 11 vorgesehen sein, die sich in dem Beispiel gemäß Fig. 1 durch den Frequenzbereich II und teilweise in den Frequenzbereich I erstreckt und dort beispielsweise linear abfällt. Anhand einer zusätzlichen Abhängigkeit der Wirkleistung P von einer Frequenzänderungsrate df/dt kann vorgesehen sein, dass die Energieerzeugungsanlage eine Wirkleistung P einspeist, die stärker reduziert ist, als es durch die Frequenzstatik 10 alleine vorgesehen ist. Damit speist die Energieerzeugungsanlage im Falle einer statischen Netzfrequenz f eine Wirkleistung P gemäß Frequenzstatik 10 ein, während sie im Falle einer dynamischen Änderung der Netzfrequenz f eine Wirkleistung P einspeist, die in Abhängigkeit von der Frequenzänderungsrate df/dt im Abregelbereich 12 liegt und bereits bei an sich normgerechter Netzfrequenz f im Frequenzbereich I zu einer prophylaktischen Reduzierung der Wirkleistung P führt, wenn eine Frequenzänderungsrate df/dt anzeigt, dass die Netzfrequenz f sich (insbesondere schnell und/oder plötzlich) in Richtung Frequenzbereich II und in diesen hinein bewegt, und im Frequenzbereich II eine stärkere Reduzierung der Wirkleistung P als durch die statische Frequenzstatik 10 alleine vorgibt. Es versteht sich, dass die untere Abregelgrenze 11 und damit der Abregelbereich 12 sich auch weiter oder weniger weit in die Frequenzbereiche I und III erstrecken und eine andere Form, beispielsweise einen quadratischen oder stufenförmigen Verlauf aufweisen kann. Darüber hinaus kann sich der Abregelbereich grundsätzlich auch in einen Bereich oberhalb der Frequenzstatik 10 erstrecken; die Einstellung eine Wirkleistung P in diesem Bereich oberhalb der Frequenzstatik 10 kann insbesondere sinnvoll sein, wenn die Frequenz f sich beispielsweise einerseits im Frequenzbereich II befindet und somit eine Überfrequenz vorliegt, der an sich mit einer mindestens gemäß Frequenzstatik 10 reduzierten Wirkleistung entgegengewirkt werden kann, andererseits jedoch eine Frequenzänderungsrate df/dt mit negativem Vorzeichen und insbesondere hohem Betrag vorliegt, die darauf hinweist, dass die Frequenz schnell f sinkt, so dass voraussichtlich in naher Zukunft eine Unterfrequenz entstehen könnte, der durch eine Wirkleistung P begegnet wird, die (prophylaktisch) weniger als aufgrund der aktuellen Überfrequenz durch die Frequenzstatik 10 vorgegeben reduziert ist.

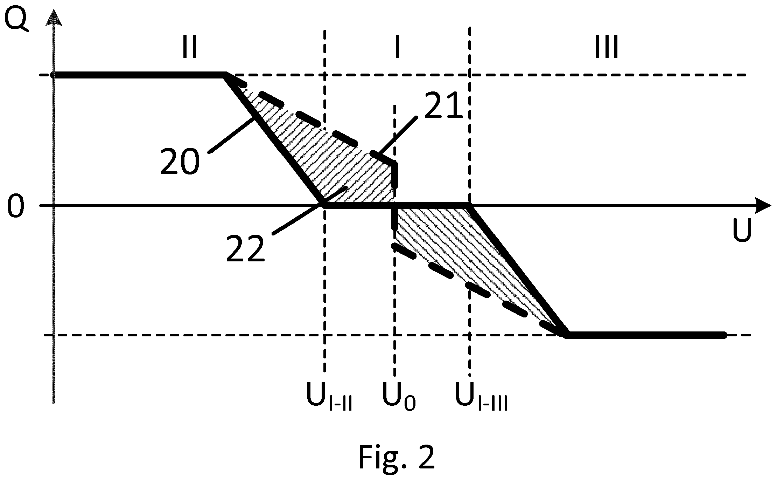

**Fig. 2** zeigt eine einzustellende Blindleistung Q, die von der Energieerzeugungsanlage in das Wechselspannungsnetz eingespeist wird, in Abhängigkeit einer Netzspannung U des Wechselspannungsnetzes. Die Netzspannung U kann in drei Bereiche I, II und III aufgeteilt werden, wobei im Bereich I ein weitgehend störungsfreier Normalbetrieb des Wechselspannungsnetz angenommen wird, während im Bereich II eine Unterspannung und im Bereich III eine Überspannung vorliegt, der durch Bereitstellung von kapazitiver bzw. induktiver Blindleistung durch die Energieerzeugungsanlage entgegenzuwirken ist.

Die als durchgezogene Linie dargestellte Blindleistungsstatik 20 entspricht einer herkömmlichen Abhängigkeit der Blindleistung Q von der Netzspannung U, anhand der eine dezentrale Energieerzeugungsanlage einem Wechselspannungsnetz mit einer Nennspannung Uo eine Blindleistung Q bereitstellt. Dazu wird der Zeitverlauf der Spannung des Wechselspannungsnetzes am Ort der Energieerzeugungsanlage gemessen und aus dem gemessenen Zeitverlauf eine maßgebende Amplitude der Netzspannung ermittelt und überwacht. Solange die Netzspannung U in einem Spannungsbereich I, d.h. eine weitgehend normgerechte Netzspannung vorliegt, kann auf eine Einspeisung von Blindleistung durch die Energieerzeugungsanlage verzichtet werden.

Wenn die Netzspannung U im Spannungsbereich II liegt, d.h. in diesem Beispiel unterhalb einer Grenzspannung U_{I-II}, gibt die Blindleistungsstatik 20 eine Einspeisung einer kapazitiven Blindleistung Q mit spannungsabhängiger Amplitude vor. Wenn die Netzspannung U im Spannungsbereich III liegt, d.h. in diesem Beispiel oberhalb einer Grenzspannung U_{I-III}, gibt die Blindleistungsstatik 20 eine Einspeisung einer induktiven Blindleistung Q mit spannungsabhängiger Amplitude vor. Dabei kann die Blindleistungsstatik 20 in den Spannungsbereichen II und III einen jeweils linearen Verlauf mit einer insbesondere von einem Netzbetreiber vorgegebenen Steilheit aufweisen. Zudem kann gefordert sein, dass die derart geforderte Blindleistung Q innerhalb einer maximalen Einstellzeit eingestellt werden muss.

Die Bereitstellung der derart definierten Blindleistung Q gemäß Blindleistungsstatik 20 bewirkt somit eine spannungsabhängige Reaktion der Energieerzeugungsanlage bereits bevor etwaige externe Befehle überlagerter Regler oder manuelle oder automatische Blindleistungsanforderungen des Netzbetreibers wirksam werden. In der Blindleistungsstatik 20 wird allerdings nur der Momentanwert der Netzspannung berücksichtigt, und die geforderten Einstellzeiten sind vergleichsweise hoch, so dass die Energieerzeugungsanlage vergleichsweise langsam auf Spannungsänderungen insbesondere in den Spannungsbereichen II und III reagiert.

Zusätzlich zur Blindleistungsstatik 20 kann daher ein durch einen zusätzliche dynamischen Stützungsbereich 22 vorgesehen sein, der durch die Blindleistungsstatik 20 und eine zusätzlichen untere bzw. obere Blindleistungsgrenze 21 aufgespannt wird und sich durch den Spannungsbereich I und teilweise in die Spannungsbereiche II und III erstreckt. Anhand einer zusätzlichen Abhängigkeit der Blindleistung Q von einer Spannungsänderungsrate dU/dt kann vorgesehen sein, dass die Energieerzeugungsanlage eine Blindleistung Q bereitstellt, die einen höheren Betrag aufweist, als durch die Blindleistungsstatik 20 alleine vorgesehen ist. Damit stellt die Energieerzeugungsanlage im Falle einer statischen Netzspannung U eine Blindleistung Q gemäß Blindleistungsstatik 20 ein, während sie im Falle einer dynamischen Änderung der Netzspannung U eine Blindleistung Q bereitstellt, die in Abhängigkeit von der Spannungsänderungsrate dU/dt im Stützungsbereich 22 liegt und bereits bei an sich normgerechter Spannung U im Spannungsbereich I zu einer prophylaktischen Bereitstellung von Blindleistung Q führt, wenn eine Spannungsänderungsrate dU/dt anzeigt, dass die Netzspannung U sich in einen der Spannungsbereiche II oder III bewegt, und in den Spannungsbereichen II und III eine Blindleistung Q mit größerem Betrag als durch die statische Blindleistungsstatik alleine vorgibt. Es versteht sich, dass die untere bzw. obere Blindleistungsgrenze 21 und damit der Stützungsbereich 22 sich im Spannungsbereich I derart überschneiden kann, dass bereits eine kapazitive bzw. eine induktive Blindleistung Q bereitgestellt wird, wenn die Netzspannung U zwar noch im Spannungsbereich I und oberhalb bzw. unterhalb von Uo liegt, aber anhand der Spannungsänderungsrate dU/dt erkennbar ist, dass sich die Netzspannung U dynamisch ändert und in den Spanungsbereich II bzw. III bewegt. Darüber hinaus kann der Stützungsbereich 22 auch eine andere Form, beispielsweise einen quadratischen oder stufenförmigen Verlauf aufweisen.

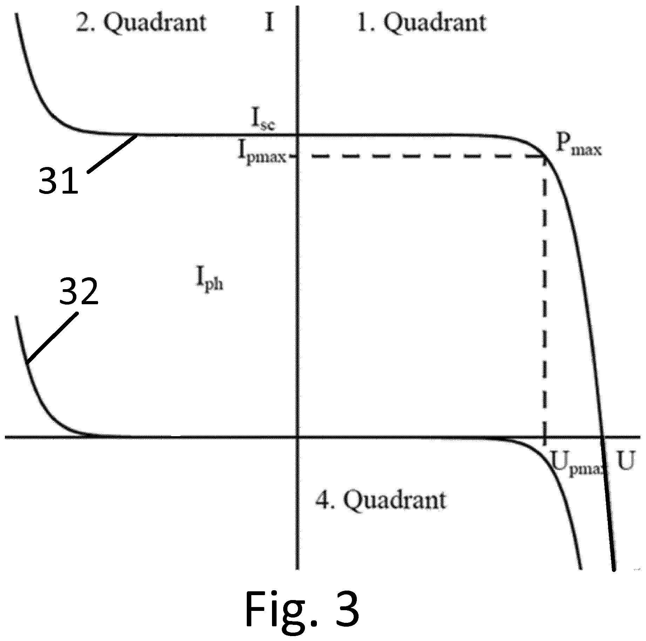

**Fig. 3** zeigt an sich bekannte PV-Kennlinien 31, 32 eines Photovoltaikgenerators bei unterschiedlichen Einstrahlungen in einem Erzeugerzählpfeilsystem. Dabei ist ein Strom I dargestellt, der durch den Photovoltaikgenerator fließt, wenn eine Spannung U an dem Photovoltaikgenerator anliegt. In einem Normalbetrieb auf den Photovoltaikgenerator einfallender Sonnenstrahlung wird der Photovoltaikgenerator im 1. Quadranten rein generatorisch betrieben, indem eine positive Spannung U an den Photovoltaikgenerator angelegt wird, beispielsweise durch einen Wechselrichter, an den der Photovoltaikgenerator angeschlossen ist, und sich ein Strom I gemäß der PV-Kennlinie 31 einstellt. Um dem Photovoltaikgenerator eine maximal mögliche Leistung Pₘₐₓ zu entnehmen, kann der Wechselrichter die Spannung U so entlang der PV-Kennlinie 31 einstellen, dass die Spannung U der Spannung Uₚₘₐₓ am Punkt maximaler Leistung (Maximum Power Point, MPP) entspricht und der Photovoltaikgenerator einen Strom Iₚₘₐₓ liefert. Ohne Sonneneinstrahlung verhält sich der Photovoltaikgenerator gemäß der PV-Kennlinie 32, so dass der Strom I im 1. Quadranten null oder kleiner null ist und der Photovoltaikgenerator folglich keine Leistung generieren kann.

Dabei ist die Steilheit der PV-Kennlinie 31 im Bereich größer der Leerlaufspannung derart hoch, dass bereits geringe Spannungsänderungen zu einem sehr großen Aufnahmestrom des PV-Generators führen.

Wird am Photovoltaikgenerator eine Spannung U größer als eine Leerlaufspannung angelegt, wobei die Leerlaufspannung im beleuchteten Zustand dem Schnittpunkt der PV-Kennlinie 31 mit der U-Achse entspricht, so kehrt sich die Richtung des Stroms I um und der Photovoltaikgenerator nimmt elektrische Leistung auf, d.h. er arbeitet als Verbraucher und damit im 4. Quadranten gemäß Fig. 3. Die anlegbare Spannung U ist dabei dadurch begrenzt, dass der Photovoltaikgenerator eine maximale Leistung aufnehmen kann, die beispielsweise durch die Wärmekapazität des Photovoltaikgenerators begrenzt ist. Zusätzlich kann die maximale Spannung U durch bauliche Gegebenheiten der Energieerzeugungsanlage, insbesondere auch durch eine maximale Spannung U oder einen maximalen Strombetrag I am Eingang des Wechselrichters begrenzt sein.

Auch im nicht beleuchteten Zustand kann der Photovoltaikgenerator gemäß PV-Kennlinie 32 elektrische Leistung aufnehmen, sofern eine ausreichend hohe Spannung U an dem Photovoltaikgenerator anliegt und ein negativer Strom I fließt.

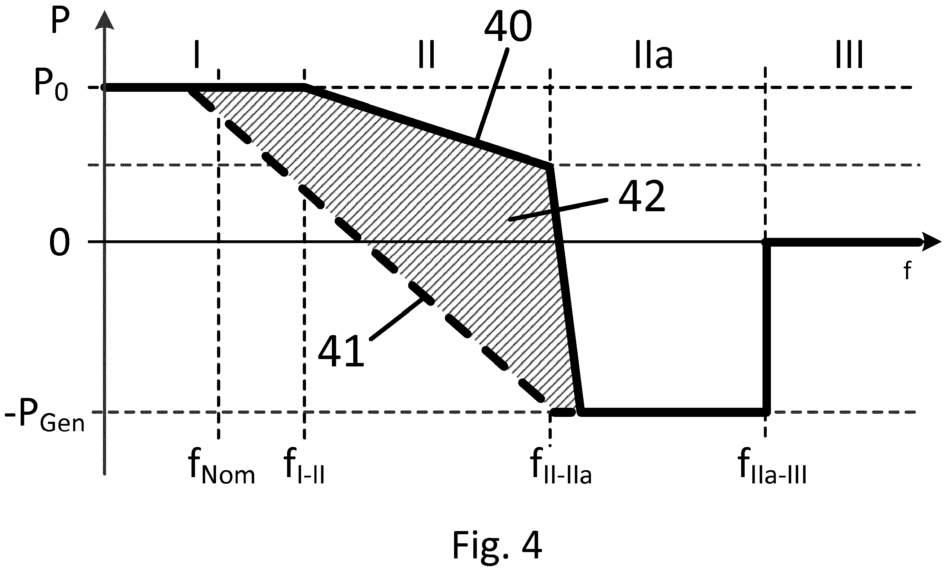

**Fig. 4** zeigt eine gegenüber Fig. 1 modifizierte Abhängigkeit einer einzustellenden Wirkleistung P von der Netzfrequenz f des Wechselspannungsnetzes. Die Netzfrequenz f kann in vier Bereiche I, II, Ila und III aufgeteilt werden, wobei analog zu Fig. 1 im Bereich I ein weitgehend störungsfreier Normalbetrieb des Wechselspannungsnetzes mit einer Netzfrequenz f im Bereich der Nennfrequenz f_{Nom} angenommen wird und im Bereich II eine Überfrequenz vorliegt, der von der Energieerzeugungsanlage entgegenzuwirken ist. Im Bereich Ila, der an den Bereich II anschließt, kann gemäß einer Frequenzstatik 40 anstatt der gemäß Fig. 1 vorgesehenen Trennung eine Rückspeisung in den Photovoltaikgenerator vorgesehen sein, die einem etwaigen Leistungsüberschuss im Wechselspannungsnetz als Ursache der Überfrequenz effektiver entgegenwirken kann als eine Trennung, indem dem Wechselspannungsnetz Wirkleistung entnommen und in den Photovoltaikgenerator rückgespeist wird. Es versteht sich, dass der Verlauf der Frequenzstatik 40 im Bereich Ila eine andere als die in Fig. 4 dargestellte Form, beispielsweise einen quadratischen oder stufenförmigen Verlauf aufweisen kann. Im Bereich III ist die Netzfrequenz wiederum so hoch, dass die Energieerzeugungsanlage sich vom Wechselspannungsnetz trennen soll; hier kann von einem Ausfall des Wechselspannungsnetz ausgegangen werden, wobei zu einem geregelten Wiederanfahren des Wechselspannungsnetzes idealerweise alle Erzeuger und Verbraucher zunächst vom Wechselspannungsnetz getrennt sein sollten.

Zusätzlich zur Frequenzstatik 40 kann ein Abregelbereich 42 mit einer unteren Grenze 41 vorgesehen sein, der sich in dem Beispiel gemäß Fig. 4 durch den Frequenzbereich II und teilweise in die Frequenzbereiche I und Ila erstreckt und dort beispielsweise linear abfällt. Anhand einer zusätzlichen Abhängigkeit der Wirkleistung P von einer Frequenzänderungsrate df/dt kann vorgesehen sein, dass die Energieerzeugungsanlage eine Wirkleistung P einspeist, die in Abhängigkeit von der Frequenzänderungsrate df/dt im Abregelbereich 41 liegt und bereits bei an sich normgerechter Netzfrequenz f im Frequenzbereich I zu einer prophylaktischen Reduzierung der Wirkleistung P führt, wenn eine Frequenzänderungsrate df/dt anzeigt, dass die Netzfrequenz f sich (schnell und/oder plötzlich) in Richtung Frequenzbereich II und in diesen hinein bewegt, und im Frequenzbereich II eine stärkere Reduzierung der Wirkleistung P als durch die statische Frequenzstatik 10 alleine vorgibt. Zusätzlich erstreckt sich der Abregelbereich 42 in einen Bereich negativer Wirkleistung P erstreckt, in dem die Energieerzeugungsanlage dem Wechselspannungsnetz Wirkleistung entnimmt und in den Photovoltaikgenerator rückspeist. Damit speist die Energieerzeugungsanlage im Falle einer statischen Netzfrequenz f gemäß Frequenzstatik 40 im Bereich II eine reduzierte Wirkleistung P ein und kann dem Wechselspannungsnetz im Bereich Ila zusätzlich Wirkleistung entnehmen. Im Falle einer dynamischen Änderung der Netzfrequenz f kann die Energieerzeugungsanlage eine Wirkleistung P einspeisen bzw. dem Wechselspannungsnetz entnehmen, wobei der Betrag und das Vorzeichen der Wirkleistung P im Abregelbereich 42 zum einen durch die Netzfrequenz f und zum anderen durch eine Abhängigkeit von der Frequenzänderungsrate df/dt vorgegeben werden kann. Es versteht sich, dass die untere Grenze 41 und damit der Abregelbereich 42 sich auch weiter oder weniger weit in die Frequenzbereiche I und Ila erstrecken und eine andere Form, beispielsweise einen quadratischen oder stufenförmigen Verlauf aufweisen kann.

In Anlehnung an die derzeitigen Richtlinien beginnt somit bei Überschreitung einer definierten Frequenzgrenze f_{I-II} die Abregelung der Wirkleistung der Energieerzeugungsanlage mit einem beispielsweise normativ vorgegebenen Gradienten ΔP/Δf. Bei Überschreitung einer weiteren definierten Frequenzgrenze f_{II-IIa} oder nach einer vollständigen Abregelung der Wirkleistung P der Energieerzeugungsanlage auf P=0W kann bei einer weiteren Erhöhung der Netzfrequenz f die Wirkleistung P mit demselben oder einem steileren Gradienten ΔP/Δf weiter reduziert und ggf. auf einen negativen Wert gesetzt werden, indem eine Rückspeisung von Wirkleistung in den Photovoltaikgenerator erfolgt. Diese Entnahme von Wirkleistung P aus dem Wechselspannungsnetz kann solange erfolgen, bis im Wechselspannungsnetz das Leistungsgleichgewicht wiederhergestellt ist und die Netzfrequenz f Werte innerhalb zulässiger Toleranzen, insbesondere Werte im Bereich I annimmt. Falls die Netzfrequenz f eine weitere definierte Frequenzgrenze f_{IIa-III} überschreitet und/oder mit der im Wechselspannungsnetz verfügbaren Regelleistung kein Leistungsgleichgewicht und keine Absenkung der Netzfrequenz f in den Bereich I möglich ist, kann eine Netztrennung der Anlage erfolgen.

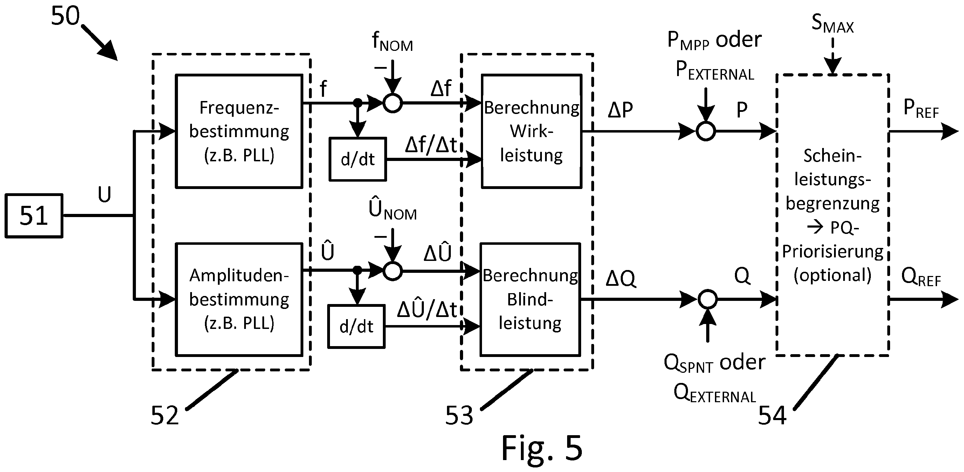

Fig. 5 zeigt einen für die Bestimmung von Sollwerten P_{Soll}, Q_{Soll} für eine einzuspeisende Wirkleistung P bzw. eine einzuspeisende Blindleistung Q zuständige Regelstrecke 50. Diese Regelstrecke 50 kann Teil einer an sich bekannten kaskadierten Regelung eines Wechselrichters einer Energieerzeugungsanlage sein, wobei die Regelung beispielsweise einen inneren AC-Stromregelkreis und einem äußeren DC-Spannungsregelkreis umfasst, so dass die an Eingang des Wechselrichters und damit am Photovoltaikgenerator anliegende DC-Spannung über den vom Wechselrichter in das Wechselspannungsnetz eingespeisten AC-Wirkstrom geregelt wird. Zur Umsetzung eines negativen Sollwertes P_{Soll}, d.h. zur Rückspeisung von Wirkleistung in den Photovoltaikgenerator und entsprechender Einstellung des PV-Generatorarbeitspunkts kann zunächst aus dem negativen Wirkleistungssollwert ein negativer Wirkstrom berechnet und dieser direkt mit der AC-Regelung des Wechselrichters eingeregelt werden. Durch den negativen Wirkstrom entsteht ein Rückstrom in einen Zwischenkreis des Wechselrichters, so dass die DC-Spannung im Zwischenkreis steigt. Dadurch steigt unmittelbar oder mittelbar über einen eingangsseitigen DC-DC-Wandler des Wechselrichter auch die Eingangsspannung des Wechselrichters und damit die Spannung am Photovoltaikgenerator, bis sich im Zwischenkreis des Wechselrichters ein Gleichgewicht zwischen der in den Photovoltaikgenerator abfließenden Leistung und der aus dem Wechselspannungsnetzes entnommenen Leistung einstellt. Der Photovoltaikgenerator nimmt dann gemäß seiner aktuellen PV-Kennlinie 31, 32 Leistung auf. Die Dynamik dieses Regelvorgangs kann mit einer schnellen Anregelzeit von etwa einem Viertel der Netzperiode und einer Einschwingzeit von wenigen Netzperioden realisiert werden.

Die erfindungsgemäße Betriebsweise von PV-Generatoren als Last lässt sich prinzipiell in jedes herkömmliche Regelungsverfahren für Wechselrichter integrieren und vergrößert die verfügbare Stellamplitude der Energieerzeugungsanlage als Stellglied am Wechselspannungsnetz. Eine mögliche Regelungsfunktion 50 zur Umsetzung des erfindungsgemäßen Verfahrens ist in Fig. 5 illustriert. Mittels einer AC-Spannungsmessung 51 wird ein Zeitverlauf einer Netzspannung U des Wechselspannungsnetzes gemessen und daraus beispielsweise mittels einer Frequenz- und Amplitudenbestimmungseinheit 52 (z.B. einer PLL) die Netzfrequenz f und die Netzspannung Ü bestimmt und ständig überwacht. Daraus werden eine Frequenzabweichung Δf von einer Nominalfrequenz f_{Nom}, eine Frequenzänderungsrate Δf/Δt, eine Spannungsabweichung ΔÛ von einer Nominalspannung Ü_{Nom} und eine Spannungsänderungsrate ΔÛ/Δt berechnet. In einem Berechnungsblock 53 wird aus der Frequenzabweichung Δf und der Frequenzänderungsrate Δf/Δt ein (vorläufiger) Sollwert für eine Wirkleistungsänderung ΔP berechnet, insbesondere anhand einer der in Fig. 1 und Fig. 4 abgebildeten beispielhaften Abhängigkeiten der Wirkleistung P von der Netzfrequenz f. Aus der Spannungsabweichung ΔÛ der Spannungsänderungsrate ΔÛ/Δt wird im Berechnungsblock 53 ein (vorläufiger) Sollwert für eine Blindleistungsänderung ΔQ berechnet, insbesondere anhand der in Fig. 2 dargestellten beispielhaften Abhängigkeit der Blindleistung Q von der Netzspannung Ü und der Spannungsänderungsrate ΔÛ/Δt. Die (vorläufigen) Sollwerte ΔP, ΔÛ werden mit aktuellen Werten der Maximalleistung P_{MPP} oder einer Vorgabewirkleistung P_{External} und mit aktuellen Werten der momentanen Blindleistung Q_{SPTN} oder einer Vorgabeblindleistung Q_{External} addiert. In einem Begrenzungsblock 54 wird ggf. eine Priorisierung zwischen Wirkleistung P und Blindleistung Q vorgenommen, wenn die einzustellenden (vorläufigen) Werte für die Wirkleistung P und die Blindleistung Q zusammengenommen eine Scheinleistung S ergeben würden, die höher als ein vorgegebener Scheinleistungsgrenzwert S_{Max} des Wechselrichters wäre. Im Ergebnis liefert die Regelungsfunktion 50 gemäß Fig. 5 Sollwerte P_{Ref}, Q_{Ref} für die einzustellende Wirkleistung P und die einzustellende Blindleistung Q, die in den weiteren an sich bekannten Verfahrensschritten im Rahmen der weiteren Steuerung und Regelung des Wechselrichters derart umgesetzt werden, dass eine entsprechende Wirkleistung P_{Ref} und eine entsprechende Blindleistung Q_{Ref} zwischen Wechselrichter und Wechselspannungsnetz ausgetauscht werden.

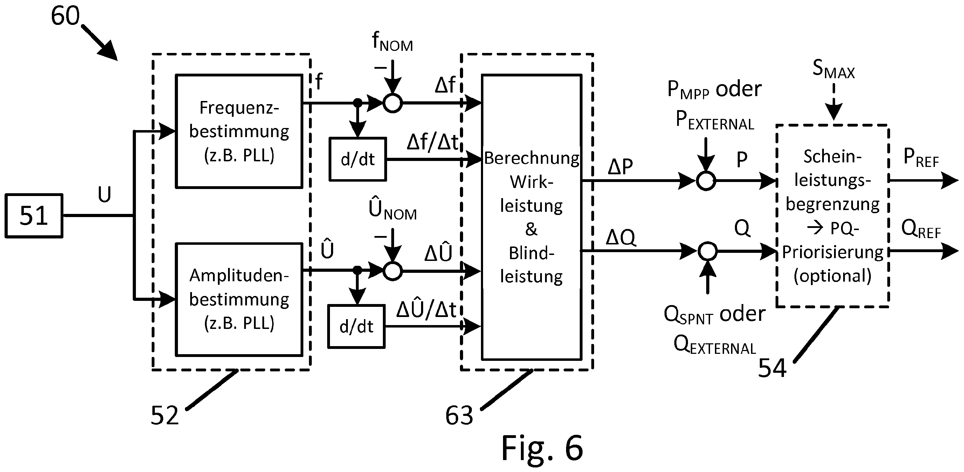

**Fig. 6** zeigt eine gegenüber Fig. 5 modifizierte Regelstrecke 60, in der die Sollwerte für die Wirkleistungsänderung ΔP und für die Blindleistungsänderung ΔQ und damit auch die entsprechenden Sollwerte P_{Ref}, Q_{Ref} im Berechnungsblock 63 jeweils unter Berücksichtigung aller vier Größen Frequenzabweichung Δf, Frequenzänderungsrate Δf/Δt, Spannungsabweichung ΔÛ und Spannungsänderungsrate ΔÛ/Δt ermittelt werden. Im Berechnungsblock 63 sind dazu Algorithmen abgelegt, die einerseits die Abhängigkeiten der Wirkleistung P von der Netzfrequenz f, insbesondere gemäß Fig. 1 oder Fig. 4, sowie der Blindleistung Q von der Netzspannung U, insbesondere gemäß Fig. 3, und andererseits etwaige gegenseitige Abhängigkeiten der Netzfrequenz f von der Blindleistung Q sowie der Netzspannung Û von der Wirkleistung P geeignet berücksichtigen.

Die Berechnung der einzustellenden Werte für die Blindleistung und die Wirkleistung mittels getrennter Regelbasen gemäß Berechnungsblock 53 in Fig. 5 bzw. mittels einer gemeinsamen Regelbasis gemäß Berechnungsblock 63 in Fig. 6 kann über WENN-DANN-Regeln erfolgen und mittels Fuzzy-Logik an das menschliche Verhalten angelehnt werden. Grob zusammengefasst kann beispielsweise für die Ermittlung der einzustellenden Wirkleistung P, die zur Aufrechterhaltung der Netzstabilität auf Basis des Netzzustands sinnvoll ist, zunächst ermittelt werden, ob die Netzfrequenzabweichung Δf im Normbereich und die Frequenzänderungsrate Δf/Δt im Normbereich ist; dann kann die momentan verfügbare MPP-Leistung P_{MPP} bzw. eine kleinere Wirkleistung Pₑₓₜₑᵣₙₐₗ eingespeist werden, letzteres falls ein Derating des Wechselrichter aus irgendwelchen Gründen (Temperaturgrenzen, WR-Stromgrenzen, externe Vorgaben etc.) erforderlich ist. Ist jedoch die Netzfrequenz f oder die Frequenzänderungsrate Δf/Δt höher als ein jeweiliger Grenzwert, dann kann die Wirkleistung P gemäß Fig. 1 oder Fig. 4 um ΔP reduziert und ggf. möglichst viel Wirkleistung P aus dem Wechselspannungsnetz bezogen und in den Photovoltaikgenerator als Last rückgespeist werden; die Energieerzeugungsanlage trennt sich in diesem Fall nicht vom Wechselspannungsnetz. Entsprechend kann insbesondere für die Ermittlung der einzustellenden Blindleistung Q, die zur Aufrechterhaltung der Netzstabilität auf Basis des Netzzustands sinnvoll ist, zunächst ermittelt werden, ob die Netzspannung Ü und die Spannungsänderungsrate ΔÛ/Δt im Normbereich liegt; dann kann auf eine Einspeisung von Blindleistung Q ins Netz verzichtet werden bzw. eine (kleine) Kompensationsblindleistung Qₛₚₙₜ oder Qₑₓₜₑᵣₙₐₗ bereitgestellt werden, letzteres falls dies aus irgendwelchen Gründen (AC-Filterblindleistungsaufnahme etc.) erforderlich ist. Ist jedoch die Abweichung der Netzspannung ΔÛ oder die Spannungsänderungsrate ΔÛ/Δt größer als ein jeweiliger Grenzwert, dann kann eine entgegenwirkende Blindleistung Q gemäß Fig. 2 eingestellt werden.

Für eine konkrete Berechnung der einzustellenden Wirkleistung P und der einzustellenden Blindleistung Q können sogenannte Zugehörigkeitsfunktionen verwendet werden, mit denen definiert werden kann, zu welchem Anteil ein gegebener Wert einer Größe zu einem von mehreren möglichen Zuständen gehört. Beispielsweise kann für die Größe Netzfrequenz f eine Zugehörigkeitsfunktion definiert werden, die die drei Zustände "Normalbetrieb", "Abregelung" und "Netztrennung" umfasst und angibt, zu welchem Anteil ein gegebener Wert der Netzfrequenz f zu welchem der drei genannten Zustände gehört; insbesondere kann dabei eine Netzfrequenz f in der Nähe der Nennfrequenz f_{Nom} mit einem Zugehörigkeitswert von 1 zum Zustand "Normalbetrieb" zugeordnet werden, während eine Frequenz oberhalb eines ersten Grenzwertes von 50,2 HZ bzw. f_{I-II} mit einem Zugehörigkeitswert zwischen null und 1 zum Zustand "Normalbetrieb" und einem komplementären Zugehörigkeitswert zwischen null und 1 zum Zustand "Abregelung" zugeordnet wird. Eine Frequenz f oberhalb eines zweiten Grenzwertes von 51,5 Hz bzw. f_{IIa-III} kann dann mit einem Zugehörigkeitswert von 1 zum Zustand "Netztrennung" zugeordnet werden. Derartige Zugehörigkeitsfunktionen können insbesondere für die jeweiligen Zusammenhänge zwischen Netzfrequenz f und Abregelung bzw. Trennung, zwischen Frequenzänderungsrate Δf/Δt und Abregelung bzw. Trennung, zwischen Wirkleistung P und Betriebsmodus (Normalbetrieb / Abregelung), zwischen Netzspannung Ü und Blindleistungseinspeisung Q (keine / untererregt / übererregt), zwischen Spannungsänderungsrate ΔU/ΔU und Blindleistung Q (keine / untererregt / übererregt) sowie zwischen Blindleistung Q und Betriebsmodus (keine / kapazitive / induktive Einspeisung) definiert werden. Insgesamt können diese Zugehörigkeitsfunktionen ein mehrdimensionales Kennfeld aufspannen.

Eine konkrete Berechnung der einzustellenden Wirkleistung P und der einzustellenden Blindleistung Q kann dann insbesondere die folgenden Schritte umfassen. Anhand der AC-Spannungsmessung 51 kann mittels einer Frequenz- und Amplitudenbestimmungseinheit 52 (z.B. einer PLL) eine Netzfrequenz f und die Amplitude der Netzspannung Ü ermittelt werden. Aus der Netzfrequenz f und der Netzspannung Ü werden jeweils Abweichungen Δf, ΔÛ vom jeweiligen Nominalwert sowie durch Differentiation die Frequenz- und Spannungsänderungsraten Δf/Δt, ΔÛ/Δt bestimmt und ständig überwacht. Für die ermittelten Werte von Δf, Δf/Δt, ΔÛ und ΔÛ/Δt können dann im Rahmen einer sogenannten Fuzzifizierung Zugehörigkeitswerte von Zugehörigkeitsfunktionen bestimmt werden. Im Rahmen einer sogenannten Aggregation & Implikation kann dann eine UND-Verknüpfung der ermittelten Zugehörigkeitswerte durchgeführt werden. Das Ergebnis der UND-Verknüpfung kann im Rahmen einer sogenannten Akkumulation & Defuzzifizierung genutzt werden, um die einzustellende Wirkleistung P und die einzustellende Blindleistung Q mittels jeweils einer normierten Gewichtungsformel zu berechnen.

Zusätzlich kann eine Priorisierung zwischen der einzustellenden Wirkleistung P und der einzustellenden Blindleistung Q durchgeführt werden, insbesondere wenn eine ermittelte Kombination einer einzustellenden Wirkleistung P und einer einzustellenden Blindleistung Q tatsächlich nicht eingestellt werden kann, weil die Energieerzeugungsanlage bzw. der Wechselrichter technisch nicht in der Lage ist, eine entsprechende resultierende Scheinleistung S bereitzustellen. Dabei kann zusätzlich berücksichtigt werden, dass eine zur Stabilisierung eines Parameters des Netzzustandes zu ergreifende Maßnahme nicht zur Destabilisierung eines anderen Parameters des Netzzustandes führen darf; beispielsweise darf eine Wirkleistungsreduktion in einem schwachen Netz keine Spannungsänderungen bewirken, die die Netzspannung Ü derart beeinflusst, dass sie einen Grenzwert unterschreitet.

Das Verfahren ermöglicht aufgrund der Berücksichtigung sowohl des Netzfrequenzmomentanwertes f als auch der Frequenzänderungsrate Δf/Δt eine stufenlose, stetige Wirkleistungseinstellung und eine schnelle Reaktion von Energieerzeugungsanlage bei Überfrequenz. Dabei verbleibt die Energieerzeugungsanlage nach einer Großstörung solange abgeregelt bzw. im Lastbetrieb, bis die Regelabweichung der Netzfrequenz f und der Frequenzänderungsrate Δf/Δt wieder normale Werte annehmen. Das Wiederhochfahren der Wirkleistung P kann automatisch mit der Abregeldynamik übriger, langsamerer Erzeuger im Netzabschnitt erfolgen. Nach Fehlerklärung können die Energieerzeugungsanlagen mit diesem Verfahren wieder die einstrahlungsabhängige MPP-Leistung einspeisen. Im Falle einer stationär verbleibenden Überfrequenz kann es zu einer andauernden Abregelung kommen, die jedoch regelmäßig durch spannungsstellende Energieerzeugungsanlagen langsam wieder ausgeregelt werden kann. Andauernde Regelabweichungen werden jedoch bevorzugt nicht akkumuliert, um sie komplett auszuregeln, da eine einzelne mit dem beschriebenen Verfahren betriebene Energieerzeugungsanlage dazu nicht imstande ist, was insbesondere dann der Fall ist, wenn die elektrische Nennleistung der einzelnen Erzeugungsanlage viel kleiner ist als die gesamte Erzeugungsleistung im Wechselspannungsnetz.

Hinsichtlich der technischen Anforderungen an eine Energieerzeugungsanlage bzw. einen Wechselrichter einer Energieerzeugungsanlage ist anzumerken, dass insbesondere zweistufige Wechselrichter mit vorgeschalteten DC-DC-Wandlern unter Umständen eine Diode im Strompfad zwischen Gleichstrom-Generator und Wechselrichter-Brückenschaltung aufweisen, die eine Rückspeisung in den Generator blockieren können. Derartige Wechselrichter bedürfen einer leichten Modifikation, beispielsweise in Form einer Überbrückungsmöglichkeit für die Diode, die insbesondere einen Überbrückungsschalter umfassen kann. Für den Rückspeisebetrieb kann ein derartiger Überbrückungsschalter unmittelbar vor Beginn der Wirkleistungsaufnahme der Energieerzeugungsanlage geschlossen werden.

Die Erfindung beschreibt eine Möglichkeit, stromgeregelte Energieerzeugungsanlagen mit einem Photovoltaikgenerator, aber ohne nennenswerten elektrischen Energiespeicher als Last zwecks Frequenzstabilisierung zu betreiben. Sie ermöglicht es, den Stellbereich von Energieerzeugungsanlagen am Netz im Vergleich zum gängigen Stand der Technik zu erweitern und mit einer hohen Dynamik zur Netzstabilisierung eines Wechselspannungsnetzes mit hoher Durchdringung mit stromrichterbasierten Einspeisern beizutragen.

Die Erfindung erweitert den PQ-Stellbereich von Energieerzeugungsanlagen mit Photovoltaikgeneratoren von zwei auf vier Quadranten. Im besten Fall steht die doppelte negative Regelleistung gegenüber dem Stand der Technik zur Verfügung. Prinzipiell ist es gemäß der Erfindung möglich, eine weniger einstrahlungsabhängige, definierte, absolute, negative Regelleistung bereitzustellen, indem die Photovoltaikgeneratoren der Energieerzeugungsanlage als Last betrieben werden.

Damit stehen einem Netzbetreiber erweiterte Möglichkeiten zur Netzstützung bei Großereignissen mit Hilfe von Energieerzeugungsanlagen zur Verfügung, wobei sich Wechselrichter von Energieerzeugungsanlagen mit Photovoltaikgeneratoren als Erzeuger insbesondere als schnell steuerbare Last zur Frequenzstabilisierung eignen.

### BEZUGSZEICHENLISTE

- 10: Frequenzstatik
- 11: Abregelgrenze
- 12: Abregelbereich
- 20: Blindleistungsstatik
- 21: Blindleistungsgrenze
- 22: Stützungsbereich
- 31, 32: PV-Kennlinie
- 40: Frequenzstatik
- 41: Abregelgrenze
- 42: Abregelbereich
- 50, 60: Regelungsfunktion
- 51: Spannungsmessung
- 52: Frequenz- und Amplitudenbestimmungseinheit
- 53, 63: Berechnungsblock
- 54: Begrenzungsblock
- I, II, IIa, III: Bereiche

## Patentansprüche

1. Verfahren zum Betrieb einer Energieerzeugungsanlage mit einem Photovoltaikgenerator und einem Wechselrichter, wobei elektrische Leistung zwischen dem Wechselrichter und einem Wechselspannungsnetz transferiert wird, wobei die transferierte elektrische Leistung eine Wirkleistung (P) und einen Blindleistung (Q) umfasst, wobei in einem ersten Betriebsmodus der Photovoltaikgenerator mittels des Wechselrichters in einem Punkt maximaler Wirkleistung betrieben wird, wobei in einem zweiten Betriebsmodus die Wirkleistung (P) in Abhängigkeit von einem Netzfrequenzmomentanwert (f) und von einer Netzfrequenzänderungsrate (Δf/Δt) eingestellt wird, und wobei in dem zweiten Betriebsmodus die Blindleistung (Q) in Abhängigkeit von einem Netzspannungsmomentanwert (U) eingestellt wird,
**dadurch gekennzeichnet, dass** in dem zweiten Betriebsmodus die Blindleistung (Q) zusätzlich in Abhängigkeit von einer Netzspannungsänderungsrate (ΔU/Δt) eingestellt wird und dass die vom Wechselrichter in das Wechselspannungsnetz eingespeiste Wirkleistung (P) im zweiten Betriebsmodus auf einen Wert kleiner null reduziert wird, so dass durch den Wechselrichter Wirkleistung (P) aus dem Wechselspannungsnetz bezogen wird und die so bezogene Wirkleistung (P) durch den Wechselrichter gleichgerichtet und als DC-Leistung in den Photovoltaikgenerator rückgespeist wird, wenn
- die momentane Frequenzabweichung (Δf) des Netzfrequenzmomentanwerts (f) von einer Referenzfrequenz (f_{Nom}) einen Frequenzabweichungsgrenzwert überschreitet oder
- die eingespeiste Wirkleistung (P) in Abhängigkeit von einer momentanen Frequenzabweichung (Δf) des Netzfrequenzmomentanwerts (f) von einer Referenzfrequenz (f_{Nom}) zu einem ersten Zeitpunkt auf null reduziert wurde und die momentane Frequenzabweichung (Δf) zu einem zweiten, späteren Zeitpunkt über der Frequenzabweichung (Δf) zum ersten Zeitpunkt liegt oder
- die Netzfrequenzänderungsrate (Δf/Δt) einen Frequenzänderungsratengrenzwert überschreitet.

2. Verfahren gemäß Anspruch 1, **dadurch gekennzeichnet, dass** in dem zweiten Betriebsmodus die Wirkleistung (P) zusätzlich in Abhängigkeit von dem Netzspannungsmomentanwert (U) und/oder von der Netzspannungsänderungsrate (ΔU/Δt) eingestellt wird und/oder dass die Blindleistung (Q) zusätzlich in Abhängigkeit von dem Netzfrequenzmomentanwert (f) und/oder von der Netzfrequenzänderungsrate (Δf/Δt) eingestellt wird.

3. Verfahren gemäß Anspruch 1 oder 2, **dadurch gekennzeichnet, dass** in dem zweiten Betriebsmodus in Abhängigkeit von Eigenschaften des Wechselspannungsnetzes, insbesondere in Abhängigkeit einer vor Inbetriebnahme der Energieerzeugungsanlage festgelegten oder bei einem Wechsel vom ersten in den zweiten Betriebsmodus aktuell ermittelte Trägheit und/oder Netzimpedanz des Wechselspannungsnetzes eine Priorisierung festgelegt wird, anhand derer für den Fall, dass sich aus der einzustellenden Wirkleistung (P) und der einzustellenden Blindleistung (Q) eine einzustellende Scheinleistung (S) ergibt, die oberhalb eines für den Wechselrichter gegebenen Scheinleistungsgrenzwertes (S_{Max}) liegt, festgelegt wird, ob bevorzugt die einzustellende Wirkleistung (P) und eine geringere als die einzustellende Blindleistung (Q) oder bevorzugt die einzustellende Blindleistung (Q) und eine geringere als die einzustellende Wirkleistung (P) eingestellt wird.

4. Verfahren gemäß Anspruch 1 oder 2, **dadurch gekennzeichnet, dass** in dem zweiten Betriebsmodus für den Fall, dass sich aus der einzustellenden Wirkleistung (P) und der einzustellenden Blindleistung (Q) eine einzustellende Scheinleistung (S) ergibt, die oberhalb eines für den Wechselrichter gegebenen Scheinleistungsgrenzwertes (S_{Max}) liegt, eine Scheinleistung (S) entsprechend des Scheinleistungsgrenzwertes eingestellt wird, die
- bevorzugt die einzustellende Wirkleistung (P) und eine geringere als die einzustellende Blindleistung (Q) umfasst, wenn der Netzfrequenzmomentanwert (f) und/oder die Netzfrequenzänderungsrate (Δf/Δt) oberhalb eines jeweiligen Frequenzpriorisierungsgrenzwertes liegt, oder
- bevorzugt die einzustellende Blindleistung (Q) und eine geringere als die einzustellende Wirkleistung (P) umfasst, wenn der Netzspannungsmomentanwert (U) und/oder die Netzspannungsänderungsrate (ΔU/Δt) oberhalb eines Spannungspriorisierungsgrenzwertes liegt, oder
- Wirkleistung (P) und Blindleistung (Q) mit denjenigen Beträgen umfasst, die zum letzten Zeitpunkt eingestellt waren, an denen die einzustellende Wirkleistung (P) und die einzustellende Blindleistung (Q) eine Scheinleistung (S) unterhalb des Scheinleistungsgrenzwertes (S_{Max}) ergaben, wenn sowohl der Frequenzpriorisierungsgrenzwert als auch der Spannungspriorisierungsgrenzwert überschritten ist.

5. Verfahren zum Betrieb einer Energieerzeugungsanlage mit einem Photovoltaikgenerator und einem Wechselrichter, wobei der Wechselrichter mit einem Wechselspannungsnetz verbunden ist und elektrische Leistung mit dem Wechselspannungsnetz austauscht, wobei die ausgetauschte elektrische Leistung eine Wirkleistung (P) und eine Blindleistung (Q) umfasst, wobei das Verfahren die folgenden Schritte umfasst:
- Betrieb des Photovoltaikgenerators mittels des Wechselrichters in einem Arbeitspunkt, in dem der Photovoltaikgenerator eine maximale DC-Leistung oder eine vorgegebene, gegenüber der maximalen DC-Leistung reduzierte DC-Leistung abgibt,
- Umwandeln der DC-Leistung und Einspeisung als Wirkleistung (P) in das Wechselspannungsnetz durch den Wechselrichter,
- Messen einer momentanen Netzspannung (U) des Wechselspannungsnetzes,
- Bestimmen einer momentanen Spannungsabweichung (ΔU) der momentanen Netzspannung (U) von einer Referenzspannung (U_{Nom}),
- Einstellen der zwischen dem Wechselrichter und dem Wechselspannungsnetz ausgetauschten Blindleistung (Q) in Abhängigkeit von der momentanen Spannungsabweichung (ΔU),
- Bestimmen einer momentanen Netzfrequenz (f) des Wechselspannungsnetzes, insbesondere mittels einer PLL im Wechselrichter,
- Bestimmen einer momentanen Frequenzabweichung (Δf) der momentanen Netzfrequenz (f) von einer Referenzfrequenz (f_{Nom}),
- Reduzieren der vom Wechselrichter in das Wechselspannungsnetz eingespeisten Wirkleistung (P) in Abhängigkeit von der momentanen Frequenzabweichung (Δf), wenn die momentane Frequenzabweichung (Δf) einen ersten Frequenzabweichungsgrenzwert überschreitet,
- Bestimmen einer Frequenzänderungsrate (Δf/Δt) aus dem Zeitverlauf der Netzfrequenz (f)
- Reduzieren der vom Wechselrichter in das Wechselspannungsnetz eingespeisten Wirkleistung (P) in Abhängigkeit von der Frequenzänderungsrate (Δf/Δt),
**gekennzeichnet durch** die folgenden weiteren Schritte:
- Bestimmen einer Spannungsänderungsrate (ΔU/Δt) aus dem Zeitverlauf der Netzspannung (U),
- Einstellen der zwischen dem Wechselrichter und dem Wechselspannungsnetz ausgetauschten Blindleistung (Q) in Abhängigkeit von der Spannungsänderungsrate (ΔU/Δt), wobei das Reduzieren der vom Wechselrichter in das Wechselspannungsnetz eingespeisten Wirkleistung (P) auf einen Wert kleiner null erfolgt, so dass durch den Wechselrichter Wirkleistung (P) aus dem Wechselspannungsnetz bezogen wird, wenn
- die momentane Frequenzabweichung (Δf) einen zweiten Frequenzabweichungsgrenzwert überschreitet oder
- die eingespeiste Wirkleistung (P) in Abhängigkeit von einer momentanen Frequenzabweichung (Δf) zu einem ersten Zeitpunkt auf null reduziert wurde und die momentane Frequenzabweichung (Δf) zu einem zweiten, späteren Zeitpunkt über der Frequenzabweichung (Δf) zum ersten Zeitpunkt liegt oder
- die Frequenzänderungsrate (Δf/Δt) einen Frequenzänderungsratengrenzwert überschreitet, und Gleichrichten der so bezogenen Wirkleistung (P) und Rückspeisen als DC-Leistung in den Photovoltaikgenerator durch den Wechselrichter.

6. Verfahren gemäß einem der Ansprüche 1 bis 5, **dadurch gekennzeichnet, dass** die Wirkleistung (P) anhand eines Wirkleistungsstellwertes (P_{Ref}) vorgegeben wird, der in Abhängigkeit von der momentanen Frequenzabweichung (Δf) und der Frequenzänderungsrate (Δf/Δt) berechnet wird, wobei der momentanen Frequenzabweichung (Δf) und der Frequenzänderungsrate (Δf/Δt) Zugehörigkeitswerte von Zugehörigkeitsfunktionen zugeordnet werden, eine UND-Verknüpfung der Zugehörigkeitswerte ausgeführt wird und der Wirkleistungsstellwert (P_{Ref}) anhand einer normierten Gewichtung der verknüpften Zugehörigkeitswerte ermittelt wird.

7. Verfahren gemäß einem der Ansprüche 1 bis 6, **dadurch gekennzeichnet, dass** die Blindleistung (Q) anhand eines Blindleistungsstellwertes (Q_{Ref}) vorgegeben wird, der in Abhängigkeit von der momentanen Spannungsabweichung (ΔU) und der Spanungsänderungsrate (ΔU/Δt) berechnet wird, wobei der momentanen Spannungsabweichung (ΔU) und der Spannungsänderungsrate (ΔU/Δt) Zugehörigkeitswerte von Zugehörigkeitsfunktionen zugeordnet werden, eine UND-Verknüpfung der Zugehörigkeitswerte ausgeführt wird und der Blindleistungsstellwert (Q_{Ref}) anhand einer normierten Gewichtung der verknüpften Zugehörigkeitswerte ermittelt wird.

8. Energieerzeugungsanlage mit einem Photovoltaikgenerator und einem Wechselrichter, **dadurch gekennzeichnet, dass** der Wechselrichter zur Durchführung eines Verfahrens gemäß einem der Ansprüche 1 bis 7 eingerichtet ist.

9. Energieerzeugungsanlage gemäß Anspruch 8, der Wechselrichter umfassend eine AC-seitige Wechselrichterbrückenschaltung, einen DC-seitigen Gleichspannungswandler und einen Gleichspannungszwischenkreis, **dadurch gekennzeichnet, dass** der DC-seitige Gleichspannungswandler eine Diode im Leistungspfad und Mittel zur Überbrückung der Diode im Falle einer Rückspeisung elektrischer Leistung in den Photovoltaikgenerator umfasst.

## Claims

1. A method for operating an energy generation system comprising a photovoltaic generator and an inverter, wherein electric power is transferred between the inverter and an AC voltage grid, wherein the transferred electric power comprises an active power (P) and a reactive power (Q), wherein the photovoltaic generator, in a first operating mode, is operated at a maximum active power point (MPP) by way of the inverter, wherein the active power (P), in a second operating mode, is set depending on a grid frequency instantaneous value (f) and on a grid frequency rate of change (df/dt), and wherein the reactive power (Q), in the second operating mode, is set depending on a grid voltage instantaneous value (U),
**characterized in that** the reactive power (Q), in the second operating mode, is set additionally depending on a grid voltage rate of change (dU/dt), and that the active power (P) fed into the AC voltage grid by the inverter, in the second operating mode, is set to a value less than zero, such that active power (P) is drawn from the AC voltage grid by the inverter and the active power (P) thus drawn is rectified by the inverter and fed back into the photovoltaic generator as DC power, if
- the instantaneous frequency deviation (df) exceeds a second frequency deviation limit value, or
- the active power (P) fed in has been reduced to zero at a first time depending on an instantaneous frequency deviation (df) and the instantaneous frequency deviation (df) at a second, later time is greater than the frequency deviation (df) at the first time, or
- the frequency rate of change (df/dt) exceeds a frequency rate of change limit value.

2. The method as claimed in claim 1, **characterized in that**,
in the second operating mode, the active power (P) is additionally set depending on the grid voltage instantaneous value (U) and/or on the grid voltage rate of change (dU/dt), and/or that the reactive power (Q) is additionally set depending on the grid frequency instantaneous value (f) and/or on the grid frequency rate of change (df/dt).

3. The method as claimed in claim 1 or 2, **characterized in that**,
in the second operating mode, depending on properties of the AC voltage grid, in particular depending on an inertia and/or grid impedance of the AC voltage grid established before the energy generation system is started up or determined currently when changing from the first to the second operating mode, a prioritization is defined on the basis of which, if the active power (P) to be set and the reactive power (Q) to be set result in an apparent power (S) to be set that is above an apparent power limit value (S_{Max}) defined for the inverter, it is established whether preferably the active power (P) to be set and a reactive power lower than the reactive power (Q) to be set or preferably the reactive power (Q) to be set and an active power lower than the active power (P) to be set is set.

4. The method as claimed in claim 1 or 2, **characterized in that**,
in the second operating mode, if the active power (P) to be set and the reactive power (Q) to be set result in an apparent power (S) to be set that is above an apparent power limit value (S_{Max}) defined for the inverter, an apparent power (S) is set, in accordance with the apparent power limit value, which
- preferably comprises the active power (P) to be set and a reactive power lower than the reactive power (Q) to be set if the grid frequency instantaneous value (f) and/or the grid frequency rate of change (df/dt) is above a respective frequency prioritization limit value, or
- preferably comprises the reactive power (Q) to be set and an active power lower than the active power (P) to be set if the grid voltage instantaneous value (U) and/or the grid voltage rate of change (dU/dt) is above a voltage prioritization limit value, or
- comprises active power (P) and reactive power (Q) with the magnitudes that were set at the last time at which the active power (P) to be set and the reactive power (Q) to be set resulted in an apparent power (S) below the apparent power limit value (S_{Max}) if both the frequency prioritization limit value and the voltage prioritization limit value are exceeded.

5. A method for operating an energy generation system containing a photovoltaic generator and an inverter, wherein the inverter is connected to an AC voltage grid and exchanges electric power with the AC voltage grid, wherein the exchanged electric power comprises an active power (P) and a reactive power (Q), wherein the method comprises the following steps:
- operating the photovoltaic generator by way of the inverter at an operating point (MPP) at which the photovoltaic generator outputs a maximum DC power or a predefined DC power reduced in comparison with the maximum DC power,
- converting the DC power and feeding it into the AC voltage grid as active power (P) by way of the inverter,
- measuring an instantaneous grid voltage (U) of the AC voltage grid,
- determining an instantaneous voltage deviation (dU) of the instantaneous grid voltage (U) from a reference voltage (Uo),
- setting the reactive power (Q) exchanged between the inverter and the AC voltage grid depending on the instantaneous voltage deviation (dU),
- determining an instantaneous grid frequency (f) of the AC voltage grid, in particular by way of a PLL in the inverter,
- determining an instantaneous frequency deviation (df) of the instantaneous grid frequency (f) from a reference frequency (f_{Nom}),
- reducing the active power (P) fed into the AC voltage grid by the inverter depending on the instantaneous frequency deviation (df) if the instantaneous frequency deviation (df) exceeds a first frequency deviation limit value,
- determining a frequency rate of change (df/dt) from the temporal profile of the grid frequency (f),
- reducing the active power (P) fed into the AC voltage grid by the inverter depending on the frequency rate of change (df/dt),
**characterized by** the following further steps:
- determining a voltage rate of change (dU/dt) from the temporal profile of the grid voltage (U),
- setting the reactive power (Q) exchanged between the inverter and the AC voltage grid depending on the voltage rate of change (dU/dt),
wherein the reducing of the active power (P) fed into the AC voltage grid by the inverter leads to a value less than zero, such that the inverter draws active power (P) from the AC voltage grid if
- the instantaneous frequency deviation (df) exceeds a second frequency deviation limit value or
- the active power (P) fed in has been reduced to zero at a first time depending on an instantaneous frequency deviation (df) and the instantaneous frequency deviation (df) at a second, later time is greater than the frequency deviation (df) at the first time, or
- the frequency rate of change (df/dt) exceeds a frequency rate of change limit value,
and
- rectifying the active power (P) thus drawn and feeding it back into the photovoltaic generator as DC power by way of the inverter.

6. The method as claimed in one of claims 1 to 6, **characterized in that** the active power (P) is specified on the basis of an active power setting value (P_{Ref}) that is calculated depending on the instantaneous frequency deviation (df) and the frequency rate of change (df/dt), wherein the instantaneous frequency deviation (df) and the frequency rate of change (df/dt) are assigned membership values of membership functions, an AND operation is performed on the membership values and the active power setting value (P_{Ref}) is determined based on a standardized weighting of the linked membership values.

7. The method as claimed in one of claims 1 to 7, **characterized in that** the reactive power (Q) is specified on the basis of a reactive power setting value (Q_{Ref}) that is calculated depending on the instantaneous voltage deviation (dU) and the voltage rate of change (dU/dt), wherein the instantaneous voltage deviation (dU) and the voltage rate of change (dU/dt) are assigned membership values of membership functions, an AND operation is performed on the membership values and the reactive power setting value (Q_{Ref}) is determined based on a standardized weighting of the linked membership values.

8. An inverter for an energy generation system containing a photovoltaic generator, **characterized in that** the inverter is configured so as to perform a method as claimed in one of claims 1 to 8.

9. The inverter as claimed in claim 9, comprising an AC-side inverter bridge circuit, a DC-side DC voltage converter and a DC voltage intermediate circuit, **characterized in that** the DC-side DC voltage converter comprises a diode in the power path and means for bypassing the diode in the event of electric power being fed back into the photovoltaic generator

## Revendications

1. Procédé d'exploitation d'une installation de production d'énergie avec un générateur photovoltaïque et un onduleur, la puissance électrique étant transférée entre l'onduleur et un réseau de tension alternative, la puissance électrique transférée comprenant une puissance active (P) et une puissance réactive (Q), dans lequel, dans un premier mode de fonctionnement, le générateur photovoltaïque est exploité au moyen de l'onduleur en un point de puissance active maximale, dans lequel, dans un deuxième mode de fonctionnement, la puissance active (P) est réglée en fonction d'une valeur instantanée de la fréquence du réseau (f) et d'un taux de variation de la fréquence du réseau (Δf/Δt), et dans lequel, dans le deuxième mode de fonctionnement, la puissance réactive (Q) est réglée en fonction d'une valeur instantanée de tension du réseau (U),
**caractérisé en ce que,** dans le deuxième mode de fonctionnement, la puissance réactive (Q) est en outre réglée en fonction d'un taux de variation de la tension du réseau (ΔU/Δt) et **en ce que** la puissance active (P) injectée par l'onduleur dans le réseau de tension alternative est réduite à une valeur inférieure à zéro dans le deuxième mode de fonctionnement, de sorte que la puissance active (P) est prélevée par l'onduleur sur le réseau de tension alternative, et la puissance active (P) ainsi prélevée est redressée par l'onduleur et réinjectée dans le générateur photovoltaïque en tant que puissance DC lorsque
- l'écart de fréquence instantané (Δf) de la valeur instantanée de la fréquence du réseau (f) par rapport à une fréquence de référence (f_{Nom}) dépasse une valeur limite d'écart de fréquence ou
- la puissance active (P) injectée a été réduite à zéro en fonction d'un écart de fréquence instantané (Δf) de la valeur instantanée de la fréquence du réseau (f) par rapport à une fréquence de référence (f_{Nom}) à un premier moment et l'écart de fréquence instantané (Δf) à un deuxième moment ultérieur est supérieur à l'écart de fréquence (Δf) au premier moment ou
- le taux de variation de la fréquence du réseau (Δf/Δt) dépasse une valeur limite du taux de variation de la fréquence.

2. Procédé selon la revendication 1, **caractérisé en ce que**
dans le deuxième mode de fonctionnement, la puissance active (P) est réglée en outre en fonction de la valeur instantanée de la tension du réseau (U) et/ou du taux de variation de la tension du réseau (ΔU/Δt) et/ou la puissance réactive (Q) est réglée en outre en fonction de la valeur instantanée de la fréquence du réseau (f) et/ou du taux de variation de la fréquence du réseau (Δf/Δt).

3. Procédé selon la revendication 1 ou 2, **caractérisé en ce que**
dans le deuxième mode de fonctionnement, en fonction de propriétés du réseau de tension alternative, notamment en fonction d'une inertie et/ou d'une impédance du réseau du réseau de tension alternative déterminée avant la mise en service de l'installation de production d'énergie ou actuellement déterminée lors d'un passage du premier au deuxième mode de fonctionnement, une priorisation est définie à l'aide de laquelle, dans le cas, que l'on obtient, à partir de la puissance active (P) à régler et de la puissance réactive (Q) à régler, une puissance apparente (S) à régler qui est supérieure à une valeur limite de puissance apparente (S_{Max}) donnée pour l'onduleur, on détermine si l'on règle de préférence la puissance active (P) à régler et une puissance réactive (Q) inférieure à celle à régler ou si l'on règle de préférence la puissance réactive (Q) à régler et une puissance réactive (P) inférieure à celle à régler.

4. Procédé selon la revendication 1 ou 2, **caractérisé en ce que**
dans le deuxième mode de fonctionnement, dans le cas où la puissance active (P) à régler et la puissance réactive (Q) à régler donnent une puissance apparente (S) à régler qui est supérieure à une valeur limite de puissance apparente (S_{Max}) donnée pour l'onduleur, on règle une puissance apparente (S) correspondant à la valeur limite de puissance apparente, qui est
- comprend de préférence la puissance active (P) à régler et une puissance réactive (Q) inférieure à celle à régler, lorsque la valeur instantanée de la fréquence du réseau (f) et/ou le taux de variation de la fréquence du réseau (Δf/Δt) est supérieur à une valeur limite de priorité de fréquence respective, ou
- comprend de préférence la puissance réactive (Q) à régler et une puissance active (P) inférieure à celle à régler, lorsque la valeur instantanée de la tension du réseau (U) et/ou le taux de variation de la tension du réseau (ΔU/Δt) est supérieur à une valeur limite de priorité de tension, ou
- la puissance active (P) et la puissance réactive (Q) sont réglées au dernier moment où la puissance active (P) et la puissance réactive (Q) à régler ont donné une puissance apparente (S) inférieure à la limite de puissance apparente (SMax) lorsque la limite de priorité de fréquence et la limite de priorité de tension sont toutes deux dépassées.

5. Procédé d'exploitation d'une installation de production d'énergie comprenant un générateur photovoltaïque et un onduleur, l'onduleur étant connecté à un réseau de tension alternative et échangeant de la puissance électrique avec le réseau de tension alternative, la puissance électrique échangée comprenant une puissance active (P) et une puissance réactive (Q), le procédé comprenant les étapes suivantes :
- Faire fonctionner le générateur photovoltaïque au moyen de l'onduleur à un point de fonctionnement dans lequel le générateur photovoltaïque délivre une puissance DC maximale ou une puissance DC prédéterminée réduite par rapport à la puissance DC maximale,
- Conversion de la puissance DC et injection en tant que puissance active (P) dans le réseau de tension alternative par l'onduleur,
- Mesure d'une tension du réseau instantanée (U) du réseau de tension alternative,
- Détermination d'un écart de tension instantané (ΔU) de la tension instantanée du réseau (U) par rapport à une tension de référence (U_{Nem}),
- Réglage de la puissance réactive (Q) échangée entre l'onduleur et le réseau de tension alternative en fonction de l'écart de tension instantané (ΔU),
- Détermination d'une fréquence du réseau instantanée (f) du réseau de tension alternative, notamment au moyen d'une PLL dans l'onduleur,
- Déterminer un écart de fréquence instantané (Δf) de la fréquence instantanée du réseau (f) par rapport à une fréquence de référence (fNom),
- Réduction de la puissance active (P) injectée par l'onduleur dans le réseau de tension alternative en fonction de l'écart de fréquence instantané (Af), lorsque l'écart de fréquence instantané (Δf) dépasse une première valeur limite d'écart de fréquence,
- Détermination d'un taux de variation de fréquence (Δf/Δt) à partir de l'évolution temporelle de la fréquence du réseau (f),
- Réduction de la puissance active (P) injectée par l'onduleur dans le réseau de tension alternative en fonction du taux de variation de fréquence (Δf/Δt),
**caractérisé par** les étapes supplémentaires suivantes :
- Détermination d'un taux de variation de la tension (ΔU/Δt) à partir de l'évolution temporelle de la tension du réseau (U),
- Réglage de la puissance réactive (Q) échangée entre l'onduleur et le réseau de tension alternative en fonction du taux de variation de la tension (ΔU/Δt),
une réduction de la puissance active (P) injectée par l'onduleur dans le réseau de tension alternative à une valeur inférieure à zéro étant effectuée, de sorte que de la puissance active (P) est prélevée par l'onduleur dans le réseau de tension alternative lorsque
- l'écart de fréquence instantané (Δf) dépasse une deuxième valeur limite d'écart de fréquence ou
- la puissance active (P) injectée a été réduite à zéro en fonction d'un écart de fréquence instantané (Δf) à un premier moment et l'écart de fréquence instantané (Δf) à un deuxième moment ultérieur est supérieur à l'écart de fréquence (Δf) au premier moment ou
- le taux de variation de fréquence (Δf/Δt) dépasse une valeur limite du taux de variation de la fréquence,
et redresser la puissance active (P) ainsi obtenue et la réinjecter sous forme de puissance continue dans le générateur photovoltaïque par l'onduleur.

6. Procédé selon l'une quelconque des revendications 1 à 5, **caractérisé en ce que** la puissance active (P) est prédéterminée à l'aide d'une valeur de réglage de la puissance active (P_{Ref}) calculée en fonction de l'écart de fréquence instantané (Δf) et du taux de variation de la fréquence (Δf/Δt), des valeurs d'appartenance de fonctions d'appartenance étant associées à l'écart de fréquence instantané (Δf) et au taux de variation de la fréquence (Δf/Δt), une opération ET des valeurs d'appartenance étant effectuée et la valeur de réglage de la puissance active (P_{Ref}) étant déterminée à l'aide d'une pondération normalisée des valeurs d'appartenance associées.

7. Procédé selon l'une des revendications 1 à 6, **caractérisé en ce que** la puissance réactive (Q) est prédéfinie à l'aide d'une valeur de réglage de la puissance réactive (Q_{Ref}) qui est calculée en fonction de l'écart de tension instantané (ΔU) et du taux de variation de la tension (ΔU/Δt), des valeurs d'appartenance de fonctions d'appartenance étant associées à l'écart de tension instantané (ΔU) et au taux de variation de tension (ΔU/Δt), une opération ET des valeurs d'appartenance étant effectuée et la valeur de réglage de la puissance réactive (QRef) étant déterminée à l'aide d'une pondération normalisée des valeurs d'appartenance combinées.

8. Installation de production d'énergie comprenant un générateur photovoltaïque et un onduleur, **caractérisée en ce que** l'onduleur est agencé pour mettre en oeuvre un procédé selon l'une des revendications 1 à 7.

9. Installation de production d'énergie selon la revendication 8, l'onduleur comprenant un circuit en pont d'onduleur côté AC, un convertisseur de tension continue côté DC et un circuit intermédiaire de tension continue, **caractérisée en ce que** le convertisseur de tension continue côté DC comprend une diode sur le trajectoire de puissance et des moyens pour shunter la diode en cas de réinjection de puissance électrique dans le générateur photovoltaïque.
